# EUROPEAN PATENT APPLICATION

(11) **EP 4 592 985 A1**
(43) Date of publication of application: **30.07.2025**
(21) Application number: 23868181.1
(22) Date of filing: 19.09.2023
(51) Int. Cl.: G08G 1/09, E02F 3/43, E02F 9/20, E02F 9/26, G08G 1/00

(54) **AUTOMATIC OPERATION INFORMATION PROCESSING DEVICE, AUTOMATIC OPERATION INFORMATION PROCESSING METHOD, AND AUTOMATIC OPERATION INFORMATION PROCESSING PROGRAM**

(30) Priority: 21.09.2022 JP 2022150258; 01.03.2023 JP 2023031113
(71) Applicant: KOBELCO CONSTRUCTION MACHINERY CO., LTD., Hiroshima-shi, Hiroshima 731-5161 (JP)
(72) Inventor: OBATA, Soshi, Hiroshima-shi, Hiroshima 731-5161 (JP); SAKO, Mikiya, Hiroshima-shi, Hiroshima 731-5161 (JP); MIYAZAKI, Ryunosuke, Hiroshima-shi, Hiroshima 731-5161 (JP)
(74) Representative: TBK
(86) International application number: PCT/JP2023/033963
(87) International publication number: WO 2024/063060

(57) **Abstract**

Confirmation and input of information regarding automatic operation of a working machine can be easily done. An automatic operation information processing device 20 is connected to a working machine 10 capable of performing automatic operation, in a communicable manner. The automatic operation information processing device 20 includes a display unit 23o and an input unit 23i. The display unit 23o is configured to display information related to automatic operation. The input unit 23i receives information related to automatic operation in response to an operation by the operator.

## Description

### [Technical Field]

The present invention relates to an automatic operation information processing device, an automatic operation information processing method, and an automatic operation information processing program, which are for processing information related to automatic operation of a working machine.

### [Background Art]

A working machine that is operated automatically is described in, for example, Patent Literature 1.

### [Citation List]

### [Patent Literatures]

[Patent Literature 1] Japanese Laid-Open Patent Publication No. 2018-193704

### [Summary of Invention]

### [Technical Problem]

It has been desired to allow an operator to easily confirm and input information regarding automatic operation of a working machine.

Under this circumstance, an object of the present invention is to provide an automatic operation information processing device, an automatic operation information processing method, and an automatic operation information processing program, which make it possible to easily confirm and input information regarding automatic operation of a working machine.

### [Solution to Problem]

An automatic operation information processing device according to first means is connected to a working machine capable of performing automatic operation, in a communicable manner. The automatic operation information processing device includes a display unit and an input unit. The display unit is configured to display a display image including information related to the automatic operation. The input unit receives information related to the automatic operation in response to an operation by an operator.

An automatic operation information processing method according to second means includes a connection step, a display step, and an input step. In the connection step, connection to a working machine capable of performing automatic operation is made in a communicable manner. In the display step, a display image including information related to the automatic operation is displayed on a display unit. In the input step, information regarding the automatic operation, which is input by the operator through the input unit, is obtained.

An automatic operation information processing program according to third means causes a computer to execute a connection step, a display step, and an input step. In the connection step, connection to a working machine capable of performing automatic operation is made in a communicable manner. In the display step, a display image including information related to the automatic operation is displayed on a display unit. In the input step, information regarding the automatic operation, which is input by the operator through the input unit, is obtained.

### [Advantageous Effects of Invention]

By each of the first to third means, it is possible to easily check and input information regarding the automatic operation of the working machine.

### [Brief Description of Drawings]

FIG. 1 shows an automatic operation system 1 including members such as an automatic operation information processing device 20.
FIG. 2 shows a display image G displayed on a display unit 23o shown in FIG. 1, and which shows a basic screen.
FIG. 3A shows a home screen of the display image G shown in FIG. **2****.**
FIG. 3B shows a home screen of the display image shown in FIG. 2, which is shown when plural working machines 10 are connected.
FIG. 4A shows an instruction top screen of the display image G shown in FIG. 2.
FIG. 4B shows a before-instruction screen of the display image G shown in FIG. 2.
FIG. 4C shows a during-instruction screen of the display image G shown in FIG. 2.
FIG. 5A shows a trajectory confirmation screen of the display image G shown in FIG. 2.
FIG. 5B shows a trajectory change screen of the display image G shown in FIG. 2.
FIG. 6 shows a target range setting screen of the display image G shown in FIG. 2.
FIG. 7A shows an initial posture preparation screen of the display image G shown in FIG. 2.
FIG. 7B shows a working machine state preparation screen of the display image G shown in FIG. 2.
FIG. 7C shows an automatic operation mode start notification screen of the display image G shown in FIG. 2.
FIG. 8 shows an automatic operation initial setting screen of the display image G shown in FIG. 2.
FIG. 9A shows a before automatic operation start screen of the display image G shown in FIG. 2.
FIG. 9B shows an operation speed change screen of the display image G shown in FIG. 2.
FIG. 9C shows an operation count change screen of the display image G shown in FIG. 2.
FIG. 9D shows a before automatic operation start confirmation screen of the display image G shown in FIG. 2.
FIG. 10A shows a during automatic operation screen of the display image G shown in FIG. 2.
FIG. 10B shows a display setting screen of the display image G shown in FIG. 2.
FIG. 10C shows a sensor state confirmation screen of the display image G shown in FIG. 2.
FIG. 10D shows a during automatic operation screen of the display image G shown in FIG. 2, which includes a work phase display section PD.
FIG. 11 shows a during automatic operation simple screen of the display image G shown in FIG. 2.
FIG. 12A shows an automatic operation end screen of the display image G shown in FIG. 2.
FIG. 12B shows a suspension screen of the display image G shown in FIG. 2.
FIG. 13A shows an emergency stop screen of the display image G shown in FIG. 2.
FIG. 13B shows an emergency stop screen of the display image G shown in FIG. 2, which corresponds to a work content.
FIG. 14A shows a connection setting screen of the display image G shown in FIG. 2.
FIG. 14B shows a new connection task selection screen of the display image G shown in FIG. 2.
FIG. 14C shows a sensor state display screen of the display image G shown in FIG. 2.
FIG. 14D shows an accessory operation screen of the display image G shown in FIG. 2.
FIG. 15A is a flow chart showing how the automatic operation system 1 shown in FIG. 1 operates.
FIG. 15B is a flow chart showing how the automatic operation system 1 shown in FIG. 1 operates, when an all machine stop selection section F13A2 shown in FIG. 13A is selected.

### [Description of Embodiments]

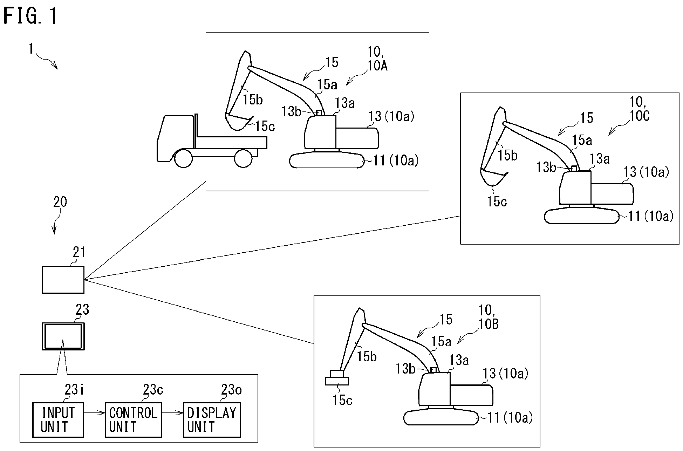

The following will describe an automatic operation system 1 with reference to FIG. 1 to FIG. 15B.

The automatic operation system 1 is a system related to the automatic operation of a working machine 10 as shown in FIG. 1. The automatic operation system 1 includes the working machine 10 and an automatic operation information processing device 20.

The working machine 10 is a machine which performs tasks. Examples of the working machine 10 include a construction machine that performs construction tasks, such as a shovel or a crane. The following description presupposes that the working machine 10 is a shovel. The working machine 10 can be automatically operated. The working machine 10 may be operated by an operator in a driver's cabin 13a (described later) or may be operated remotely. The number of working machines 10 included in the automatic operation system 1 may be one or more than one. The working machine 10 includes a machine main body 10a and an attachment 15.

The machine main body 10a is a main body portion of the working machine 10. The machine main body 10a includes a lower running body 11 and an upper turning body 13. The lower running body 11 is capable of running on a running surface (such as the ground). The lower running body 11 may be equipped with a crawler or a wheel. The upper turning body 13 is rotatably attached to the lower running body 11. The upper turning body 13 includes a driver's cabin 13a and a state display device 13b. The driver's cabin 13a is a section where the operator can operate the working machine 10. The state display device 13b is a device configured to display the state (described later) of the working machine 10. The state display device 13b, for example, is a rotating light, a screen, or a light. The state display device 13b is provided, for example, on the upper surface of the upper turning body 13 (e.g., the upper surface of the driver's cabin 13a).

The attachment 15 is a part configured to perform tasks, and includes, for example, a boom 15a, an arm 15b, and a leading-end attachment 15c. The boom 15a is attached to the upper turning body 13 in a raisable manner. The arm 15b is attached to the boom 15a in a rotatable manner.

The leading-end attachment 15c is provided at a leading end portion of the attachment 15 and attached to the arm 15b in a rotatable manner. The leading-end attachment 15c is used to perform a task on an operation target. The operation target may be soil, sand, stone, wood, metal, resin, waste, or a structure (such as a block). The leading-end attachment 15c is arranged to be a type corresponding to the operation target. For example, the leading-end attachment 15c may be a bucket which performs tasks such as scooping and drilling of an operation target that is in the form of soil, granules, chips, powder, etc. The leading-end attachment 15c may be a lifting magnet which magnetically attracts and lifts metal (operation target). The leading-end attachment 15c may be a device (e.g., a grapple and a nibbler) for pinching an operation target, or a device (e.g., a breaker) for crushing an operation target.

### (Types of Tasks Performed by Working Machine 10)

For example, the working machine 10 performs a task of catching an operation target and moving the caught operation target to a predetermined position. A specific example of a task performed by the working machine 10 will be described. The working machine 10 may perform a loading task. The loading task is a task in which the working machine 10 equipped with a bucket (an example of the leading-end attachment 15c) excavates (catches) soil (operation target) and loads the excavated soil onto a transportation vehicle (such as a dump truck) by discharging the soil on the vehicle. The working machine 10 may perform a lifting magnet task. The lifting magnet task is a task in which the working machine 10 equipped with a lifting magnet (an example of the leading-end attachment 15c) attracts (catches) metal (operation target) and moves the caught metal to a predetermined position. The working machine 10 may perform a turning upside down task. The turning upside down task is a task in which the working machine 10 equipped with a bucket, etc. turns soil (operation target) upside down. The working machine 10 may perform a structure transportation task. The structure transportation task is a task in which the working machine 10 equipped with the leading-end attachment 15c capable of gripping a structure (operation target) grips a structure and places the gripped structure at a predetermined position. It is noted that a single working machine 10 may be able to perform plural types of tasks. Whether or not a certain type of task can be performed by the working machine 10 depends on factors such as the type of the leading-end attachment 15c and the capabilities of the working machine 10.

The automatic operation information processing device 20 is a device which is configured to process information related to the automatic operation of the working machine 10. The automatic operation information processing device 20 may have a function of operating an automatic-operable working machine 10. The automatic operation information processing device 20 may have a function of assisting the management of the automatic-operable working machine 10. The automatic operation information processing device 20 is connected to the working machine 10 in a communicable manner. The connection in a communicable manner may be simply referred to as "connection". The automatic operation information processing device 20 may be equipped with various information processors (devices). Specifically, for example, the automatic operation information processing device 20 includes a server 21 (computer) and an information terminal **23.**

The server 21 is a computer (controller) configured to perform tasks such as input and output of information, computation (processing), and information storage. For example, the functions of the server 21 are achieved in such a way that a program stored in a storage unit of the server 21 is executed by a processing unit. The server 21 is placed outside the working machine 10 and the information terminal **23.** The server 21 is connected to the working machine 10.

The information terminal 23 is connected to the working machine 10. The information terminal 23 may be connected to the working machine 10 through the server 21, or may be connected directly to the working machine 10 without the intervention of the server 21**.** As an example of a case where the automatic operation information processing device 20 is connected to the working machine 10, the following will mainly describe a case where the information terminal 23 is connected to the working machine 10. The information terminal 23 is a device capable of inputting and outputting information. The information terminal 23 may or may not be portable. The information terminal 23 may be a tablet, a smartphone, or a personal computer. The information terminal 23 may function as the server 21. The information terminal 23 may be placed outside the working machine 10 or inside the working machine 10 (for example, the information terminal 23 may be brought in the working machine 10). The information terminal 23 includes a control unit 23c (computer), an input unit 23i, and a display unit 23o.

The control unit 23c is a computer (controller) configured to perform tasks such as input and output of a signal, computation (processing), and information storage. For example, the functions of the control unit 23c are achieved in such a way that a program stored in a storage unit of the control unit 23c is executed by a processing unit. The control unit 23c controls information related to image display of the display unit 23o, e.g**.,** causes the display unit 23o to display images. The control unit 23c controls information related to an input of the input unit 23i, e.g**.,** processes information input to the input unit 23i. The control unit 23c may perform control of information communication and other controls. The control unit 23c may be provided at plural parts in a distributed manner. (In other words, the control unit 23c may be a distributed system.) The control unit 23c may or may not be provided integrally with one or both of the input unit 23i and the display unit 23o. For example, the input unit 23i and the display unit 23o are provided in the information terminal 23, and the control unit 23c may be partially or entirely provided in the server 21, etc.

The input unit 23i receives information related to automatic operation in accordance with an operation by the operator. Specifically, for example, the input unit 23i may be a touch panel, a mouse, a keyboard, or a device for inputting information based on information of a line of sight of the operator. Furthermore, the input unit 23i may be a device for inputting information based on the location information of a finger of the operator in the space.

The display unit 23o is configured to display information related to automatic operation (display output unit). Specifically, for example, the display unit 23o may be a monitor (display), a device configured to project an image onto an object, or a device that uses AR (Augmented Reality) technology. An image displayed on the display unit 23o (i.e., an image that the control unit 23c causes the display unit 23o to display) is termed a display image G. The display image G includes information related to automatic operation. The display image G includes shape, pattern, color, text, symbol, etc. The display image G includes a GUI (Graphical User Interface). In addition, the information terminal 23 may have a unit (output unit) for performing outputs other than image display. Examples of such a unit include an audio output unit and a vibration output unit.

### (Automatic Operation of Working Machine 10)

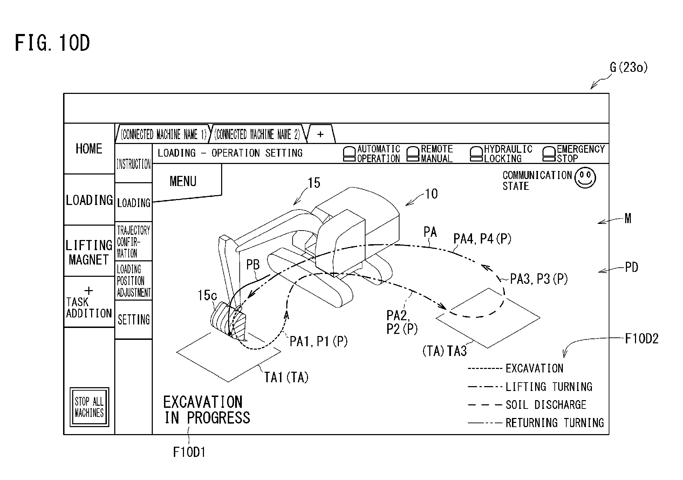

The working machine 10 is configured to be able to perform automatic operation based on a work plan. The work plan is information related to the goal of a task performed by the working machine 10, and is pre-set in the automatic operation information processing device 20 (before the automatic operation). The work plan may include information of a target route of running of the working machine 10. The work plan may include information about a target range TA (for example, a target catch range TA1 and a target release range TA3 shown in FIG. 10D) where the leading-end attachment 15c performs a task.

### (Target Route PA and Target Track)

The work plan may include information about a target route PA (also known as a target path) of a specific part of the attachment 15 (see FIG. 10D). The specific part of the attachment 15 may be, for example, the leading end portion of the leading-end attachment 15c or the base end portion of the leading-end attachment 15c (i.e., a leading end portion of the arm 15b). The specific part of the attachment 15 may be set at one place or at multiple places. The target route PA is, for example, information including information (coordinates) of positions of target points and information of the order of the target points. The work plan may include information about a target track of the specific part of the attachment 15. The target track is information in which time information is added to the information of the target route PA.

### (Cycles and Work Phases P)

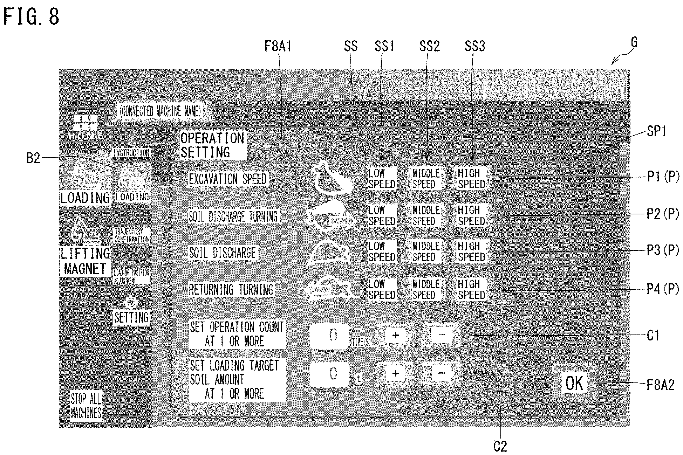

The work plan may include information for causing the working machine 10 to perform a task (e.g., a loading task or a lifting magnet task) in plural cycles. One cycle may include multiple work phases P (operation phases) (see FIG. 8 and FIG. 10D). A specific example of the work phases P is as follows. The following will describe a specific example of the work phases P when the working machine 10 automatically performs a task of catching an operation target and moving the caught operation target to a predetermined position. In this case, as shown in FIG. 10D, the work phases P include a catching phase P1 (e.g., an excavation phase), a lifting turning phase P2 (soil discharge turning phase), a release phase P3 (soil discharge phase), and a return turning phase P4. The catching phase P1 is a phase in which the leading-end attachment 15c catches an operation target in a target catch range TA1 (e.g., excavates soil). For example, the target catch range TA1 is set at a place where operation targets are gathered (e.g., a pile of soil). The lifting turning phase P2 (see FIG. 8) is a phase in which the leading-end attachment 15c moves from the target catch range TA1 toward a target release range TA3 while the leading-end attachment 15c catches the operation target. The release phase P3 is a phase in which the leading-end attachment 15c releases the operation target in a target release range TA3 (e.g., discharges soil). The target release range TA3 may be set, for example, at a predetermined range on a cargo bed of a transportation vehicle (such as a dump truck), at a predetermined range on a container other than a cargo bed, or on a predetermined range on the ground. The return turning phase P4 is a phase in which the leading-end attachment 15c moves from the target release range TA3 toward the target catch range TA1. For example, in the automatic operation, a series of work phases P (one cycle of the automatic operation) including the catching phase P1, the lifting turning phase P2, the release phase P3, and the return turning phase P4 are repeated.

### (Instruction)

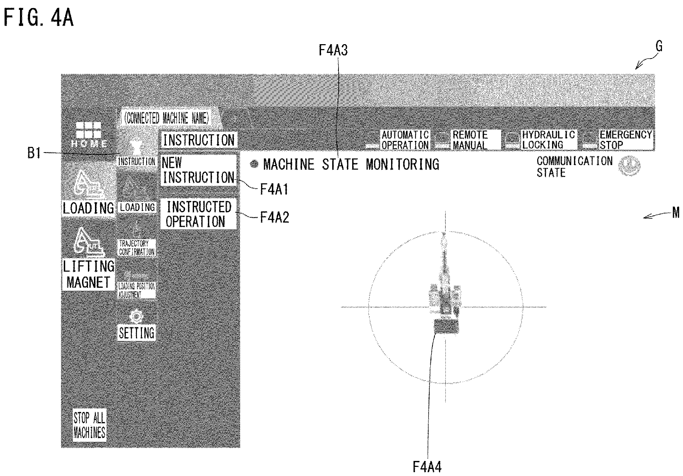

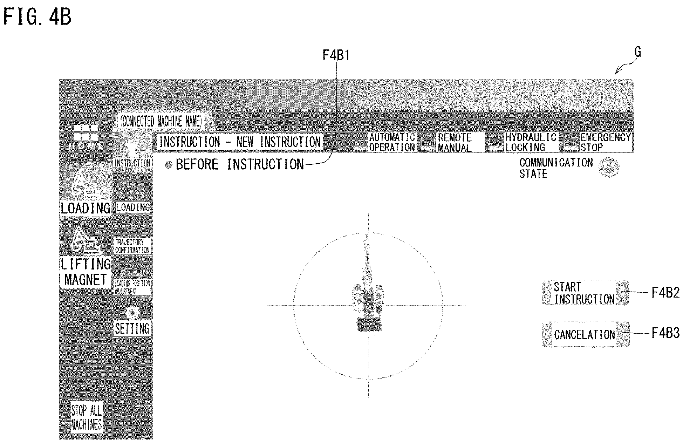

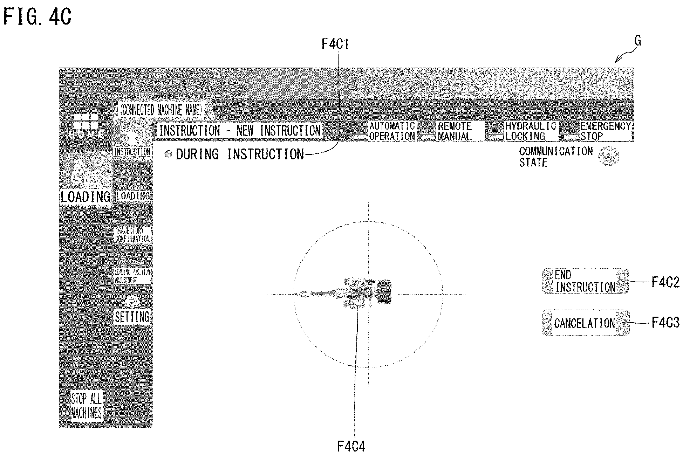

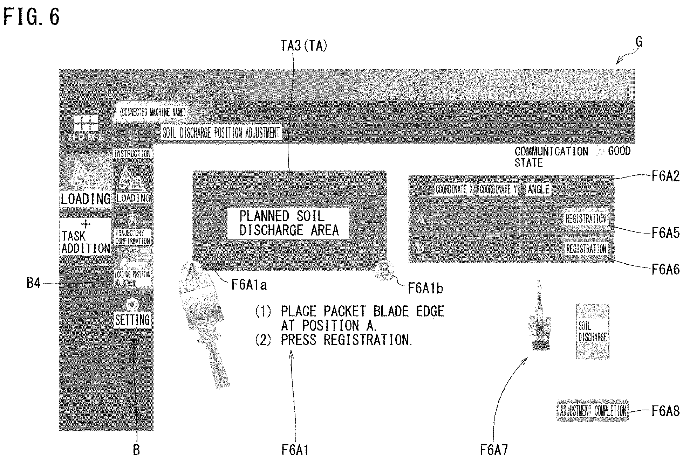

At least part of the work plan may be set by instruction (teaching), or may be set by a method other than the instruction (such as numerical input). Information set by the instruction is called instruction data. The instruction data is set in such a way that the operator operates the working machine 10 shown in FIG. 1**.** To be more specific, for example, the operator boards the working machine 10 and operates the working machine 10, or the operator remotely controls the working machine 10. For example, the operator places the specific part of the attachment 15 at a position (path, range, etc.) desirable as the instruction data, by operating the working machine 10. Based on the position where the specific part of attachment 15 is placed, the instruction data is set in the automatic operation information processing device 20. For example, the operator positions the specific part of the attachment 15 at a specific position within a range that is desirable as the target range TA (the target catch range TA1 and the target release range TA3) shown in FIG. 10D by operating the working machine 10 (see the explanation in FIG. 6 described later). The position where the specific part of the attachment 15 shown in FIG. 1 is located is calculated based on a detection result of a posture sensor (not illustrated) that is configured to detect the posture of the working machine 10. Based on the position where the specific part of attachment 15 is placed, the target range TA shown in FIG. 10D is set. For example, the operator moves the specific part of the attachment 15 along a desired path that is desired as the target route PA by operating the working machine 10 (see the below-described explanation of FIGs. 4A, 4B, and 4C). For example, the operator moves the specific part of the attachment 15 along a path that is desirable as a target track at a desirable speed for the target track, by operating the working machine 10. The automatic operation information processing device 20 then sets the path (or the track) along which the specific part of the attachment 15 has moved, as the target route PA (or the track).

### (Operation)

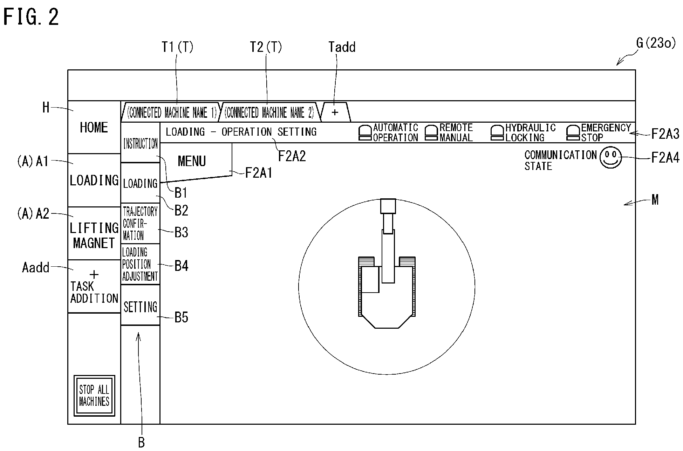

The following describes the operation of the automatic operation information processing device 20, the automatic operation information processing method, and the automatic operation information processing program shown in FIG. 1. The following will mainly explain the display image G (see FIGs. 2 to 14D) that the control unit 23c displays on the display unit 23o. The components shown in FIG. 1 (such as the working machine 10 and the automatic operation information processing device 20) will be explained with reference to FIG. 1. The display image G shown in FIG. 2 variously changes depending on the situation. The display image G has various sections (e.g., selection sections, display sections, and setting sections). Whether each section of the display image G is displayed, how images are displayed, and whether selection or operation is possible through the input unit 23i (whether the unit is active or inactive) vary depending on the situation. In the following, among the sections of the display image G, sections that are commonly displayed in most situations are described, and then other sections, screen transition, etc. are described.

FIG. 2 shows a basic screen. The basic screen includes a task selection section A, a task addition section Aadd, a function selection section B, a menu selection section F2A1, an information terminal operation content display section F2A2, a machine state display section F2A3, and a communication state display section F2A4. The basic screen further includes a home selection section H**,** a main display area M**,** a machine selection section T**,** and a machine addition section Tadd.

The task selection section A is a part that allows the operator to select the type of task to be automatically performed by the working machine 10. The task selection section A displays the types of tasks to be selectable through the input unit 23i.

This "selection" is made by the operator by operating the input unit 23i. Specifically, for example, when the input unit 23i is a touch panel, selection is made by a touch to the task selection section A. When the input unit 23i is a mouse or keyboard, selection may be made by performing an operation (such as clicking or pressing of a specific key) while a cursor is positioned on the task selection section A. In addition, selection may be made by performing a specific mouse or keyboard operation (such as pressing of shortcut keys) for selecting the task selection section A. In the following, the selection made by the operator by operating the input unit 23i will be simply referred to as "selection" (including the "selection" and "setting" of parts other than the task selection section A).

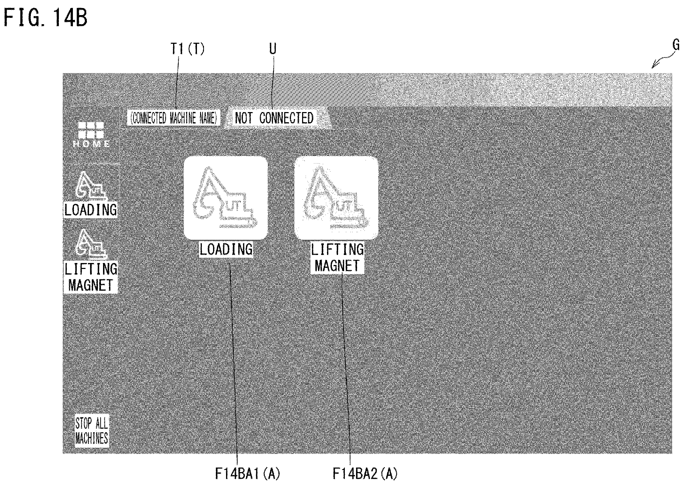

A result of selection of the type of task by the task selection section A can be used for various processes. For example, when part or all of application software used for automatic operation is different depending on the type of task, a result of selection of the task by the task selection section A may be used for selecting which piece of application software is to be used. In this case, the task selection section A functions as an application software selection section (application selection section). In addition, for example, there may be cases where a type of task is associated with a working machine 10. In this case, when narrowing working machines 10 down to a working machine 10 associated with a specific type of task, a result of selection of the task by the task selection section A may be used for selecting the type of task for which the narrowing down is performed. Furthermore, for example, when a working machine 10 is newly connected to the information terminal 23, a result of selection of the task by the task selection section A may be used for determining to which type of the task the working machine 10 to be connected is associated (see an explanation in FIG. 14B).

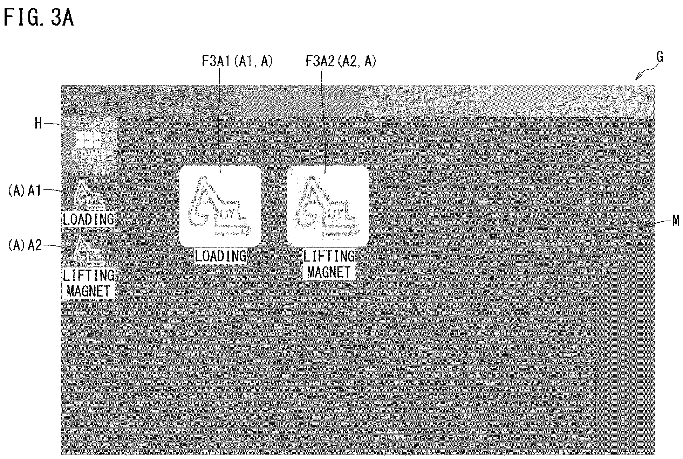

The position of the task selection section A in the display image G can be set in various ways. The position of the task selection section A in the display image G may be at the illustrated position or a position close to the illustrated position (the same applies to other sections). In the example shown in FIG. 2, the task selection section A is placed in a left end area (application selection area) of the display image G. The task selection section A may be provided in the main display area M (see a loading task selection section F3A1 and a lifting magnet task selection section F3A2 shown in FIG. 3A). The position of the task selection section A may be different from the illustrated position. (The same applies to other sections.)

The task selection section A may include at least one of a shape (form, pattern, color), a text, a symbol, or an image change (such as movement). To be more specific, for example, the task selection section A may include a button-like shape (button shape) or may include an icon. The task selection section A may include a text explaining the functions of the task selection section A, such as "loading" or "lifting magnet". Unless otherwise specified, other sections also include a shape, a text, a symbol, etc.

When the task selection section A (a section of the display image G) is selected, the task selection section A that is selected and another section that is not selected are displayed in a manner in which they distinguishable for the operator. (This is applicable to other sections.) For example, a selected section and a non-selected section may be different in at least one of a shape, a text, a symbol, or an image change. Specifically, for example, the brightness of the selected section may be higher (brighter) than the brightness of the non-selected section. (In other words, the selected section may be highlighted.)

The task selection section A is displayed for each type of task that is automatically performed by the working machine 10. Specifically, for example, when there are two types of tasks, i.e., a loading task and a lifting magnet task, the task selection section A has a loading task selection section A1 and a lifting magnet task selection section A2. The loading task selection section A1 is a section that allows the operator to select the loading task as the type of task. The lifting magnet task selection section A2 is a section that allows the operator to select the lifting magnet task as the type of task.

The task addition section Aadd is a section that is selected when a type of task selectable by the task selection section A is added. When the task addition section Add is selected, the control unit 23c performs a function of adding a type of task. For example, the task addition section Aadd is provided at a position continuous from the task selection section A. To be more specific, the task addition section Aadd is provided at a position that is, for example, below the task selection section A and adjacent to the task selection section A.

The function selection section B is a section that allows the operator to select a function related to automatic operation. For example, the function selection section B is provided at a position adjacent to (e.g., immediately to the right of) the task selection section A. The function selection section B is displayed for each function. By the function selection section B, it is possible to select a function corresponding to the type of task selected by the task selection section A. Specifically, for example, when the type of task selected by the task selection section A is the loading task, the function selection section B includes an instruction function selection section B1, a loading function selection section B2, a trajectory confirmation function selection section B3, a release range function selection section B4, and a setting section B5. The operation of the automatic operation information processing device 20 when each selection section is selected will be described later. A section (e.g., a section similar to the task addition section Aadd) may be provided in the display image G in order to add a new selection section to the function selection section B. For example, the function selection section B may include figures shaped as plural buttons.

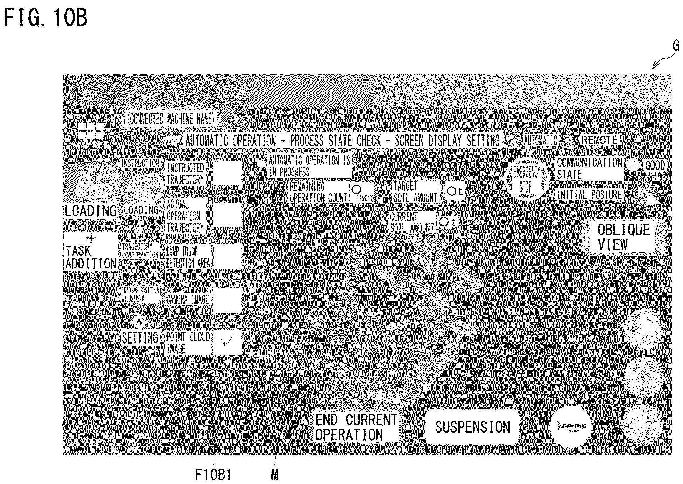

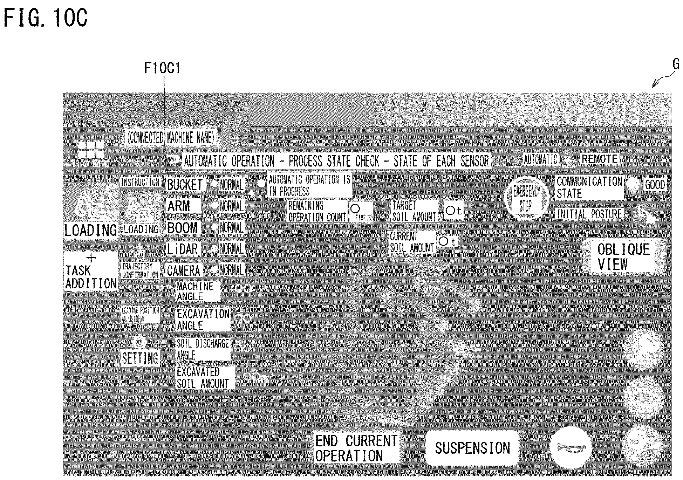

The menu selection section F2A1 is a section that is selected when a menu screen (not illustrated) is displayed. The "menu screen" described above is a screen that allows the operator to select menu items to be displayed as the display image G (see, e.g., the descriptions in FIGs. 10B and 10C).

The information terminal operation content display section F2A2 displays information indicating what is currently being done (e.g., operation or setting) at the information terminal 23. Specifically, for example, the information terminal operation content display section F2A2 displays information indicating which function is selected by the function selection section B and what is being done by the function selected by the function selection section B (operation setting in FIG. 2).

The machine state display section F2A3 displays the state of the working machine 10. The machine state display section F2A3 displays the state of the working machine 10 in such a way that the state is distinguishable for the operator. For example, the state of the working machine 10 displayed on the machine state display section F2A3 may include a state related to automatic operation and a state other than automatic operation. For example, the state of the working machine 10 displayed on the machine state display section F2A3 may include a state indicating whether the working machine 10 is normal or not. To be more specific, for example, the state of the working machine 10 displayed on the machine state display section F2A3 may include at least one of emergency stop, a state in which lever lock is locked (i.e., the working machine 10 cannot be operated), a state in which automatic operation is being done, or a state in which remote control is being performed. In this case, when the state of the working machine 10 displayed on the machine state display section F2A3 is "automatic operation", "remote manual operation", or "hydraulic locking", the state of the working machine 10 may be represented as normal. When the state of the working machine 10 displayed on the machine state display section F2A3 is "automatic operation", the state of the working machine 10 may be represented as non-normal. Specifically, for example, the machine state display section F2A3 may include an image in which a light corresponding to the state of the working machine 10 is turned on.

For example, there is a case where a state display device 13b (see FIG. 1) for displaying the state of a working machine 10 is mounted on an actual working machine 10. In this case, an image of the machine state display section F2A3 shown in FIG. 2 and image display of the state display device 13b of the actual working machine 10 are synchronized. Specifically, for example, a state of turn-on or turn-off of a revolving light (an example of the state display device 13b) of an actual working machine 10 is synchronized with a state of turn-on or turn-off in an image of the machine state display section F2A3. For example, the color of the revolving light that is turned on in the actual working machine 10 is synchronized with the color of the image of the revolving light that is turned on in the image of the machine state display section F2A3.

In connection with the above, it may be difficult for the operator to see the state display device 13b, depending on the relative position (e.g., an angle) between the state display device 13b of the actual working machine 10 and the operator. Furthermore, it may be difficult for the operator to see the state display device 13b when the actual working machine 10 is located at a position remote from the operator. In such cases, it is impossible or difficult for the operator to visually distinguish (judge, grasp) the state of the working machine 10 by looking at the state display device 13b. On the other hand, in the present embodiment, the image of the machine state display section F2A3 is synchronized with the image display of the state display device 13b of the actual working machine 10. In this case, the operator is able to distinguish (judge, grasp) the state of the working machine 10 by looking at the image of the machine state display section F2A3 of the display image G (e.g., the image at hand), without looking at the state display device 13b of the actual working machine 10. As a result, the operator who looks at the image of the machine state display section F2A3 may perform a warning to the surroundings of the working machine 10 and may perform an action such as an operation of the information terminal 23, in accordance with the state of the working machine 10.

The state of the working machine 10 may be displayed in a later-described machine selection section T. In this case, the machine selection section T may be a "machine state display section".

The communication state display section F2A4 displays a communication state of the information terminal 23. The communication state display section F2A4 may display a communication state between the information terminal 23 and the working machine 10 or a communication state between the information terminal 23 and the server 21. The communication state includes various states such as "good", "unstable", and "disconnected", for example. The communication state display section F2A4 displays the communication state in such a way that the state is distinguishable for the operator. For example, the communication state display section F2A4 changes at least one of the color and shape of an icon in accordance with the communication state.

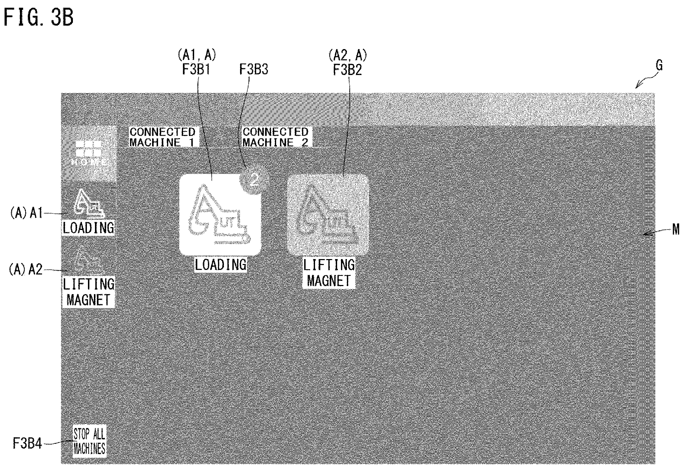

The home selection section H is a section that is selected when displaying a home screen (see e.g. FIG. 3A and FIG. 3B).

The main display area M is a section that occupies a large portion of (e.g., more than half of) the display image G. For example, when a working machine 10 is selected in the machine selection section T, the main display area M displays information about the working machine 10 selected in the machine selection section T. Furthermore, for example, when a function is selected in the function selection section B, the main display area M displays information about the function selected in the function selection section B. A specific example of the main display area M will be described later.

The machine selection section T is a section that allows the operator to select one working machine 10 from multiple working machines 10. For example, the machine selection section T is a section that allows the operator to select a working machine 10 whose information is to be displayed in the main display area M. For example, the machine selection section T is displayed in, for example, an upper part of the display image G. The machine selection section T may include a tab-shaped figure (tab shape). The machine selection section T may include an icon, etc. (not illustrated). The machine selection section T may include characters. The machine selection section T displays information for identifying a working machine 10. For example, the machine selection section T may display the name of a working machine 10, or may display the number of a working machine 10. The machine selection section T is displayed for each working machine 10. To be more specific, the machine selection section T has one tab-shaped figure for each working machine 10.

In the same manner as the above-described task selection section A, the machine selection section T displays a selected machine selection section T and a non-selected machine selection section T in a manner in which these sections are distinguishable for the operator. Specifically, for example, the brightness of a selected machine selection section T is arranged to be higher (brighter) than the brightness of a non-selected machine selection section T. (In other words, the selected section is highlighted.) In the example shown in FIG. 2, two machine selection sections T are displayed, namely a first machine selection section T1 and a second machine selection section T2. The number of machine selection sections T may be three or more. There may be a case where only one machine selection section T is displayed. There may be a case where no machine selection section T is displayed in the display image G.

### (Changes in Machine Selection Section T According to State of Working Machine 10)

The image of the machine selection section T changes depending on the state of the working machine 10. For example, the image of the machine selection section T changes depending on at least whether the current state is a state in which automatic operation is in progress, a state in which the automatic operation has been properly finished, or a state in which the automatic operation is stopped in emergency. The image of the machine selection section T may change depending on a state of the working machine 10 different from above. The image of the machine selection section T is displayed in such a way that the state of the working machine 10 is distinguishable for the operator. Specifically, for example, the color of the machine selection section T may differ depending on the state of the working machine 10.

### (Changes in Machine Selection Section T According to Selection)

The image of the machine selection section T changes between a case where a machine selection section T corresponding to a working machine 10 whose state has changed is selected (i.e., selection) and a case where the machine selection section T is not selected (i.e., non-selection) after the state of the working machine 10 is changed. The machine selection section T displays whether the machine selection section T corresponding to the working machine 10 whose state has changed is selected, in such a manner that the selection and non-selection are distinguishable for the operator. Specifically, for example, the non-selected machine selection section T may be displayed in a blinking manner (i.e., an image with high brightness and an image with low brightness are alternately displayed). The selected machine selection section T may be displayed in a non-blinking manner. Furthermore, for example, assume that the state of the working machine 10 corresponding to a non-selected second machine selection section T2 has changed (e.g., the automatic operation has been finished normally). At this stage, the second machine selection section T2 displays an image (e.g., a blue image) indicating a state change (e.g., automatic operation has been finished normally) and indicating non-selection (e.g., blinking). When the second machine selection section T2 becomes selected, the image (e.g., the blue image) indicating the state change (e.g., automatic operation has been finished normally) is maintained, whereas the image display indicating non-selection (e.g., blinking) is changed to image display indicating selection (e.g., non-blinking).

### (Image Display in Machine Selection Section T According to Type of Task)

The image of the machine selection section T changes depending on the type of automatically performed task. The image of the machine selection section T is displayed in such a way that the type of task is distinguishable for the operator. Specifically, for example, depending on the type of task associated with the working machine 10 corresponding to the machine selection section T, the image of the frame of the machine selection section T (e.g., the color of the frame) may be changed.

### (Switching of Machine Selection Section T)

A specific example of the transition of the display image G when a machine selection section T having been selected (i.e., a selected working machine 10) is switched will be described below. For example, assume that the first machine selection section T1 has been selected and information regarding the working machine 10 corresponding to the first machine selection section T1 has been displayed in the main display area M. In this situation, the second machine selection section T2 is selected (this selection will be referred to as α). As a result, information regarding the working machine 10 corresponding to the second machine selection section T2 is displayed in the main display area M. At this stage, the content displayed in the main display area M is identical with the content that was last displayed in the main display area M when the second machine selection section T2 was selected before the above-described selection (α). However, for example, in a state of automatic screen transition (e.g., a state of trying communication connection and a state of waiting for establishment of an initial posture after the suspension of automatic operation), there may be a case where a machine selection section T (first machine selection section T1) different from the second machine selection section T2 is selected. In this case, when the above-described state of automatic screen transition is finished before the selection (α) is made, the content displayed in the main display area M is a screen after the screen transition. In this case, when the above-described state of automatic screen transition has not been finished when the selection (α) is made, the content displayed in the main display area M is a screen in a state of automatic screen transition (during screen transition).

### (Image Display in Other Machine Selection Section T, Etc.)

If there is no working machine 10 connected to the information terminal 23, the machine selection section T does not need to be displayed. If there is one working machine 10 connected to the information terminal 23, the machine selection section T may or may not be displayed. If the information terminal 23 and the working machine 10 are disconnected, the machine selection section T corresponding to the disconnected working machine 10 may disappear. When a first machine selection section T1 disappears from the display image G, if there is a second machine selection section T2 that was adjacent to (e.g., immediately to the right of) the first machine selection section T1 having disappeared, that second machine selection section T2 may move to the position where the first machine selection section T1 having disappeared was displayed. If the number of connected working machines 10 increases, a machine selection section T may be added. For example, a machine selection section T may be added at a position adjacent to (e.g., immediately to the right of) a machine selection section T which has already been displayed.

### (Unconnected Tab U)

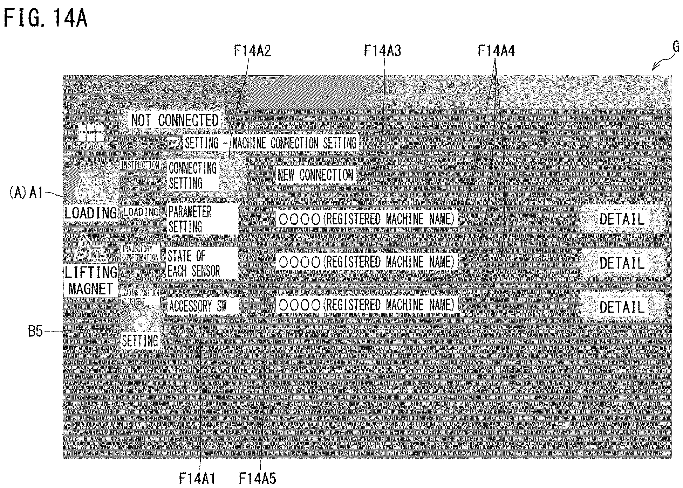

If there is no working machine 10 corresponding to the machine selection section T, an image similar to the machine selection section T (i.e., an unconnected tab U (see FIG. 14B)) may be displayed. The unconnected tab U is displayed to be distinguishable from the machine selection section T (i.e., a section which corresponds to the machine selection section T and where the working machine 10 exists) for the operator. For example, the unconnected tab U may include a text "unconnected". If there is a working machine 10 connected to the information terminal 23, the unconnected tab U may or may not be displayed. When the unconnected tab U is selected, setting for connecting the working machine 10 may be performed (see FIG. 14A).

The machine addition section Tadd is a section that is selected when a working machine 10 is added to be connected to information terminal 23. For example, the machine addition section Tadd is provided at a position that is continuous from (e.g., immediately to the right of) the machine selection section T. When the machine addition section Tadd is selected, a new machine selection section T may be added, or setting for connecting the working machine 10 (see FIG. 14A) may be performed. The machine addition section Tadd may be displayed (or activated) when a working machine 10 to be added to the information terminal 23 can be added, and may not be displayed (or deactivated) when the addition is impossible. Specifically, for example, when the number of working machines 10 connectable to the information terminal 23 is limited, the machine addition section Tadd may be displayed when the number of working machines 10 having already been connected has not reached the maximum number, and may not be displayed when the number of the working machines 10 has already reached the maximum number.

With reference to FIG. 3A to FIG. 14D, the following will describe sections different from the sections (elements) of the display image G having already been described mainly with reference to FIG. 2, and will describe a specific example of transition of the display image G. It is noted that the transition of each screen and a condition of display of each screen are variously changeable.

FIG. 3A shows a home screen. The home screen is displayed when the home selection section H is selected. The home screen includes a loading task selection section F3A1 and a lifting magnet task selection section F3A2. Each of the loading task selection section F3A1 and the lifting magnet task selection section F3A2 is displayed in the main display area M and is an icon, for example. In the home screen, the function selection section B (see FIG. 2) is not displayed. In an example shown in FIG. 3A, the machine selection section T (see FIG. 2) is not displayed.

FIG. 3B shows a home screen which is shown when there are plural working machines 10 having already been connected. This home screen includes the loading task selection section F3B1, the lifting magnet task selection section F3B2, and a machine quantity display section F3B3.

The image of the task selection section A (the loading task selection section F3B1 and the lifting magnet task selection section F3B2) changes depending on the number of connected working machines 10 of each type of task. For example, the image of the task selection section A is changed so that the existence of the connected working machine 10 of each type of task **(i.e.,** whether there is no such working machine 10) is distinguishable for the operator. Specifically, for example, the brightness of the lifting magnet task selection section F3B2 is low (dark, grayed out) when the number of the connected working machines 10 associated with the lifting magnet task is 0, as compared to a case where the number of the connected working machines 10 is more than 0.

The machine quantity display section F3B3 shows the number of connected working machines 10 of each type of task. For example, the machine quantity display section F3B3 is provided at a location where this section overlaps a part (for example, an upper right part) of the image (e.g., an icon) of the loading task selection section F3B1. Being similar to the image of the task selection section A (the loading task selection section F3B1 and the lifting magnet task selection section F3B2) displayed in the main display area M, the task selection section A in the left part (application selection area) of the display image G may change depending on the number of connected working machines 10. When the number of working machines 10 connectable to the information terminal 23 is limited, the image of the task selection section A may change depending on whether the number of the connected working machines 10 has reached the limit (in the same manner as in the above-described machine addition section Tadd). The all machine stop selection section F3B4 will be described later.

The following will mainly describe a case where the information terminal 23 is connected to a working machine 10 which performs a loading task.

### (Instruction Function)

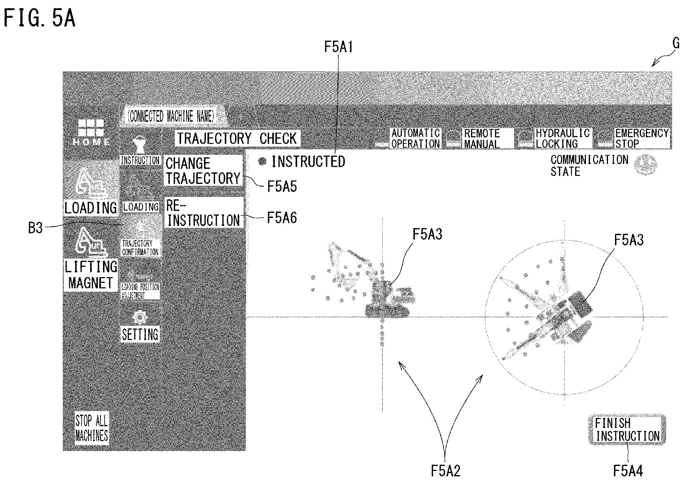

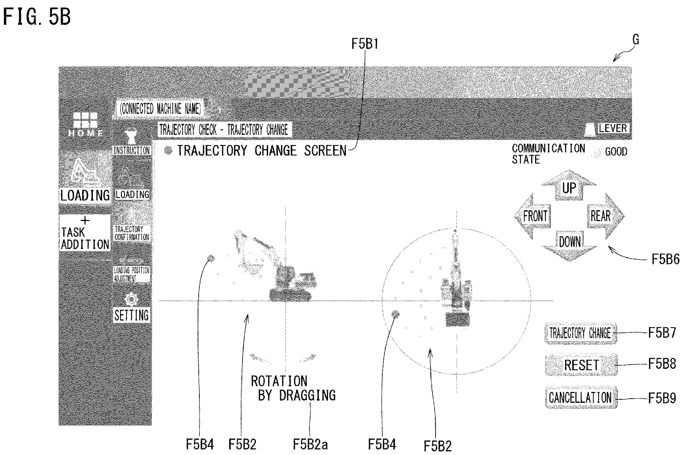

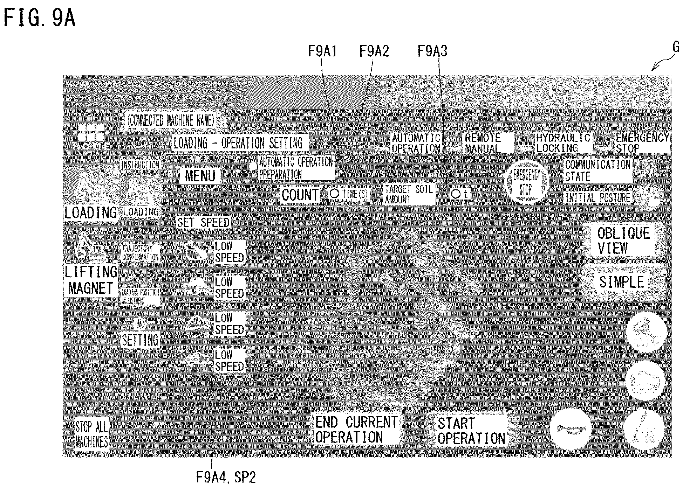

FIG. 4A shows an instruction top screen (teaching top screen). The instruction top screen is displayed when the instruction function selection section B1 is selected **(e.g.,** this screen is initially displayed). The instruction top screen includes a new instruction selection section F4A1, an instructed operation selection section F4A2, a current state display section F4A3, and a machine figure display section F4A4. The new instruction selection section F4A1 is selected by the operator when a new instruction is made. The instructed operation selection section F4A2 is selected when causing a working machine 10 to be automatically operated based on instruction data that is set in advance in the automatic operation information processing device 20 **(e.g.,** instruction data having been made in the past). The current state display section F4A3 displays information indicating that the state of the working machine 10 is monitored. The machine figure display section F4A4 includes a figure representing the working machine 10. The image representing the working machine 10 displayed in the machine figure display section F4A4 may be a three-dimensional image (see FIG. 9A) or a two-dimensional image, and the number of working machines 10 displayed in the image may be one or plural (see FIG. 5A). The display state of the machine figure display section F4A4 may be changeable **(e.g.,** changeable in response to an operation). For example, an angle of viewing the working machine 10 displayed in the machine figure display section F4A4 **(i.e.,** a viewpoint) may be changeable (see a rotatable display section F5B2a in FIG. 5B). For example, the working machine 10 displayed in the machine figure display section F4A4 may be zoomed in or out. The machine figure display section F4A4 may include an illustration (see FIG. 9A) of a work site where the working machine 10 performs the task. The illustration of the work site may be a three-dimensional image or a two-dimensional image in the same manner as the figure of the working machine 10.

FIG. 4B shows a before-instruction screen. The before-instruction screen is a screen that is displayed before an instruction is made. The before-instruction screen is a screen that is displayed when the new instruction selection section F4A1 is selected in the instruction top screen (see FIG. 4A). The before-instruction screen includes a current state display section F4B1, an instruction start selection section F4B2, and a cancellation selection section F4B3. The current state display section F4B1 shows a state regarding an instruction and indicates that the instruction has not been made. The instruction start selection sectionF4B2 is a part that is selected when a new instruction starts. The cancellation selection section F4B3 is a part that is selected when a new instruction is canceled **(i.e.,** does not start).

FIG. 4C shows a during-instruction screen which is displayed while an instruction is being made. The during-instruction screen includes a current state display section F4C1, an instruction end selection section F4C2, a cancellation selection section F4C3, and a machine figure display section F4C4. The current state display section F4C1 displays information indicating that an instruction is being made. The instruction end selection section F4C2 is a section that is selected when an instruction is finished. When the instruction end selection section F4C2 is selected, instruction data obtained by the instruction is set (stored) in the automatic operation information processing device 20. The cancellation selection section F4C3 is a section (cancellation button) that is selected when an instruction is canceled (called off). For example, the cancellation selection section F4C3 is selected when the working machine 10 is operated but the data obtained by the operation is not used as instruction data. The machine figure display section F4C4 shows a figure of the working machine 10 (in the same manner as the machine figure display section F4A4 in FIG. 4A). The figure of the working machine 10 displayed in the machine figure display section F4C4 changes according to the movement of the working machine 10 during the instruction (such as turning and movement of the attachment 15). The machine figure display section F4C4 may include a figure **(e.g.,** a curve) that represents the trajectory (path) of a specific part of the attachment 15 during the instruction (see FIG. 5A). In this case, the diagram representing the trajectory of the specific part of the attachment 15 is superimposed and displayed on the figure representing the working machine 10.

### (Trajectory Confirmation Function)

FIG. 5A shows a trajectory confirmation screen (a path confirmation screen, teaching trajectory confirmation screen). The trajectory confirmation screen is a screen that allows the operator to check an instructed trajectory (path). The trajectory confirmation screen is displayed after an instruction is made. The trajectory confirmation screen is displayed when the trajectory confirmation function selection section B3 is selected. The trajectory confirmation screen includes a current state display section F5A1, a trajectory display section F5A2, a machine figure display section F5A3, an instruction finish selection section F5A4, a trajectory change selection section F5A5, and a re-instruction selection section F5A6. The current state display section F5A1 displays information indicating that an instruction has already been made. The trajectory display section F5A2 displays a figure that represents an instructed trajectory. The trajectory display section F5A2 displays a figure indicating the trajectory in such a way as to overlap the machine figure display section F5A3 including a figure representing the working machine 10. The figure representing the trajectory in the trajectory display section F5A2 may be plural points or a line. The instruction finish selection section F5A4 is selected when an instruction is finished. when the instruction finish selection section F5A4 is selected, an instructed trajectory is set as instruction data. The trajectory change selection section F5A5 is a section that is selected when an instructed trajectory is changed by the operator. The re-instruction selection section F5A6 is a section that is selected when the operator performs the instruction again.

FIG. 5B shows a trajectory change screen (path change screen). The trajectory change screen is a screen that is displayed when a trajectory is changed. The trajectory change screen is a screen that is displayed when the trajectory change selection section F5A5 (see FIG. 5A) is selected. The trajectory change screen includes a current state display section F5B1, a trajectory display section F5B2, a trajectory change section F5B4, a movement direction selection section F5B6, a trajectory change selection section F5B7, a reset selection section F5B8, and a cancellation selection section F5B9. The current state display section F5B1 displays information indicating that a state (screen) for changing a trajectory has been set.

The trajectory may be changed in various ways. The following will describe an example of a method of changing a trajectory. The trajectory display section F5B2 displays a trajectory in the same manner as the trajectory display section F5A2 shown in FIG. 5A. The trajectory display section F5B2 shows the working machine 10 which is viewed from at least a viewpoint where the machine is viewed in a horizontal direction (e.g., a side view) and a viewpoint where the machine is viewed from directly above. This arrangement allows the operator to easily grasp the positional relationship between the working machine 10 and the trajectory. Furthermore, when the operator changes the trajectory, the arrangement allows the operator to easily grasp in which direction the trajectory should be changed. The trajectory change section F5B4 shown in FIG. 5B is a part of the trajectory and is a target of change. For example, the trajectory change section F5B4 may be a point that is a part of the trajectory, or an area that is a part of the trajectory. When the trajectory change section F5B4 is selected, the trajectory change section F5B4 becomes movable (operable) in the display image G. The movement direction selection section F5B6 is a section for moving the trajectory change section F5B4. The movement direction selection section F5B6 makes it possible to move the trajectory change section F5B4 in plural directions **(e.g.,** four directions such as upward, downward, forward, and rearward). The movement direction selection section F5B6 may include a figure **(e.g.,** an arrow). The movement direction selection section F5B6 may be arranged to be selectable (active) when the trajectory change section F5B4 is selected, and may be arranged not to be selectable (to be inactive) when the trajectory change section F5B4 is not selected. The trajectory change section F5B4 may be movable in the display image G by an operation different from the operation of the movement direction selection section F5B6. For example, the trajectory change section F5B4 may be movable in the display image G by an operation of tapping and dragging a touch panel or an operation of dragging a mouse cursor.

The trajectory change selection section F5B7 is selected when a change of the trajectory is confirmed (determined). When the trajectory change selection section F5B7 is selected, the display image G is returned to the trajectory confirmation screen (see FIG. 5A). When the change of the trajectory is confirmed, the trajectory after the change is set in the information terminal 23 (in the automatic operation information processing device 20), as instruction data used for automatic operation of the working machine 10. The reset selection section F5B8 is selected when the trajectory before the change is reinstated. For example, when plural parts **(e.g.,** plural points) of a trajectory are changed, all parts having been changed may be returned to the positions before the change, when the reset selection section F5B8 is selected. For example, when the reset selection section F5B8 is selected, only at least one (e.g., one point) of changed parts (e.g., plural points) may be returned to the position before the change. Specifically, for example, the changed parts (e.g., plural points) may be returned to the positions before the change in the order in which the part changed last is returned first, the part changed second from the last is returned second, and so on. The cancellation selection section F5B9 is selected when a change of the trajectory is canceled. When the cancellation selection section F5B9 is selected, the display image G is returned to the trajectory confirmation screen (see FIG. 5A).

### (Target Range Adjustment Function)

FIG. 6 shows a target range setting screen. The target range setting screen is a screen for setting a target range TA. In the example shown in FIG. 6, the target range setting screen is a release range setting screen (soil discharge position adjustment screen) that is a screen for setting a range of positions where an operation target having been caught is released **(i.e.,** a target release range TA3). For example, the release range setting screen is a screen for setting a position (soil discharge position) where excavated soil is loaded onto a vehicle. The release range setting screen is displayed when the release range function selection section B4 (soil discharge position adjustment function selection section) is selected. The "setting" of the release range may be adjustment (correction) of a release range set in advance, or may be setting of a new release range. For example, a release range may be set after an instruction is made. Alternatively, for example, a release range may be set without an instruction. The release range setting screen includes a release range setting method display section F6A1, a setting information display section F6A2, registration selection sections F6A5 and F6A6, a relative position display section F6A7, and a setting completion selection section F6A8.

The release range setting method display section F6A1 shows a method for setting the release range (planned soil discharge area). The release range setting method display section F6A1 displays which position of the release range is specified. The release range setting method display section F6A1 displays how the specified positions F6A1a and F6A1b should be specified. (A specific example will be given later.) The setting information display section F6A2 displays information regarding the specified positions F6A1a and F6A1b having been set. The setting information display section F6A2 may display coordinates of the specified positions F6A1a and F6A1b or may display a rotational angle of the upper turning body 13 relative to the lower running body 11. The setting information display section F6A2 displays sets of information of the respective specified positions F6A1a and F6A1b. The registration selection section F6A5, F6A6 is selected in a predetermined state for registering a specified position. To be more specific, for example, the section is selected in a state in which the specific part of the attachment 15 is placed at the specified position F6A1a or F6A1b. For example, the position of the specific part of the attachment 15 when the registration selection section F6A5, F6A6 is selected is registered (set) in the information terminal 23 as the position of the specified position F6A1a, F6A1b. The registration selection section F6A5, F6A6 is displayed for each specified position F6A1a, F6A1b.

The following will describe a specific example of a method of setting the release range (planned soil discharge area). In this example, the release range is quadrilateral (e.g., rectangular) in shape when viewed from above. The release range is set in such a way that the specified positions F6A1a and F6A1b which are at the respective two corners of the release range and are close to the working machine 10 are specified. Alternatively, the release range may be set in such a way that specified positions at three or more (e.g., four) points of the release range are specified. In this example, the specified position F6A1a is registered and then the specified position F6A1b is registered. When the specified position F6A1a is registered, the release range setting method display section F6A1 is displayed to indicate that the specific part (the blade edge of the bucket in FIG. 6) of the attachment 15 is placed at the specified position F6A1a. The operator operates the working machine 10 to place the specific part of the attachment 15 at the specified position F6A1a. In this state, the registration selection section F6A5 corresponding to the specified position F6A1a is selected. As a result, the position of the specified position F6A1a is registered, the information of the specified position F6A1a is displayed in the setting information display section F6A2, and the registration selection section F6A5 of the specified position F6A1a becomes inactive. Subsequently, the registration selection section F6A6 of the next specified position F6A1b becomes active. Then the specified position F6A1b is registered in the same manner as the registration of the specified position F6A1a. At this stage, the release range setting method display section F6A1 is displayed to indicate that the bucket blade edge is placed at the specified position F6A1b.

The relative position display section F6A7 displays a figure indicating the relative positions of the release range (planned soil discharge area) and the working machine 10. The setting completion selection section F6A8 is selected when the setting of the release range is completed. For example, the setting completion selection section F6A8 is normally inactive and becomes active when all sets of information of the specified position F6A1a, F6A1b are set.

Being similar to the release range, a catch range (target catch range TA1 (see FIG. 10D), e.g., a planned excavation area) where the working machine 10 catches an operation target may be set. The function selection section B may include a section (a catch position function selection section, not illustrated) by which a function of setting the catch range is selected.

### (Preparation for Automatic Operation)

When a work plan (e.g., instruction data) used for automatic operation is confirmed, a preparation is performed to change the operating mode of the working machine 10 to an automatic operation mode (a mode in which the working machine 10 is automatically operated). The operating mode of the working machine 10 is set, for example, by the controller of the working machine 10. The operating mode of the working machine 10 may include, for example, a mode in which the operator boards the working machine 10 and operates the working machine 10 (boarding operation mode). The operating mode of the working machine 10 may include a mode in which the operator remotely operates the working machine 10 (remote operation mode).

A condition of starting the automatic operation mode (automatic operation mode start condition) may be variously set. For example, the automatic operation mode start condition includes at least one of the following conditions: the working machine 10 is changed to the initial posture; the engine is turned off; the key is switched off; connection for remote control is cut if the machine is remotely controlled; and an emergency stop switch is powered on. The following will explain a case where the automatic operation mode start condition includes all of these conditions.

The automatic operation mode start condition includes a condition that the working machine 10 is changed to the initial posture. The working machine 10 may be changed to the initial posture due to an operation by the operator (who is on board or performs remote control), or may be automatically changed to the initial posture. The following will describe a case where the working machine 10 is manually changed to the initial posture through an operation by the operator.

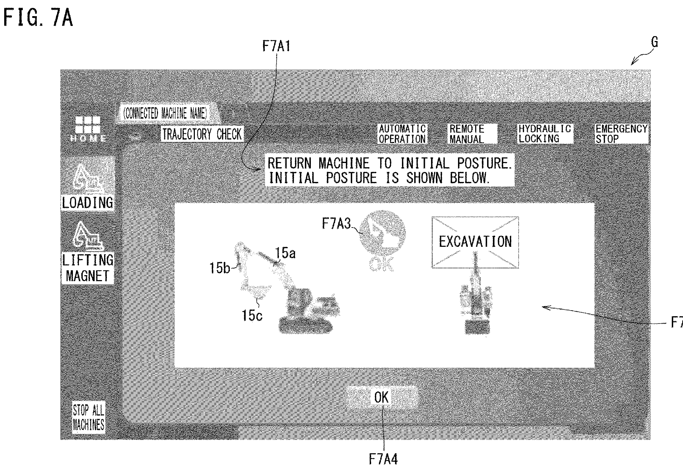

FIG. 7A shows an initial posture preparation screen. The initial posture preparation screen is a screen displayed when the working machine 10 is changed to the initial posture. The initial posture preparation screen is displayed, for example, after a work plan (e.g., instruction data) is finalized. The initial posture preparation screen includes a notification section F7A1, an initial posture display section F7A2, an initial posture preparation completion notification section F7A3, and an initial posture confirmation selection section F7A4. The notification section F7A1 is a section which notifies the operator that the working machine 10 should be changed to the initial posture. The notification section F7A1 notifies the operator that the initial posture is a posture displayed in the initial posture display section F7A2. The initial posture display section F7A2 is a section which notifies the operator of what posture is the initial posture. The initial posture display section F7A2 notifies the initial posture by, for example, a figure. In the illustrated example, in the initial posture, the boom 15a forms an angle of about 45 degrees with ground, the arm 15b extends substantially vertically from the boom 15a, and the opening portion of the leading-end attachment 15c (bucket) extends substantially horizontally. In the initial posture, furthermore, the leading-end attachment 15c is provided straight above a range (planned excavation area) where an operation target is caught. The initial posture preparation completion notification section F7A3 displays whether the working machine 10 becomes in the initial posture, in a distinguishable manner for the operator. For example, the initial posture preparation completion notification section F7A3 may include an icon, and the color of the icon may be changed depending on whether the working machine 10 is changed to the initial posture. The initial posture preparation completion notification section F7A3 may include characters such as "OK" or "NG". The initial posture confirmation selection section F7A4 is a section (OK button) which is selected when the working machine 10 takes the initial posture. The initial posture confirmation selection section F7A4 may be inactive when the working machine 10 does not take the initial posture, and may become active when the working machine 10 takes the initial posture.

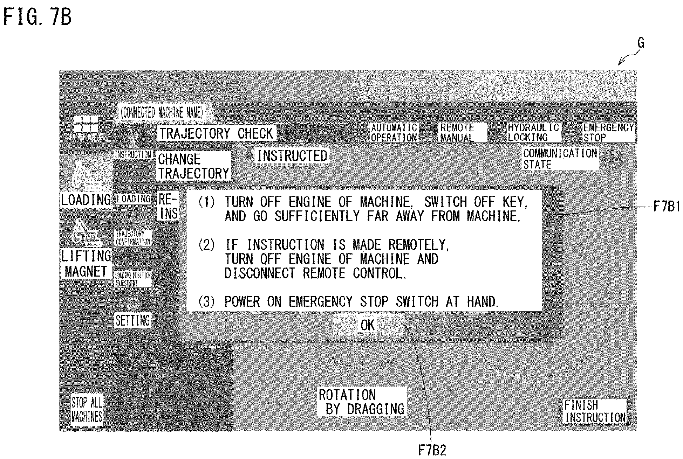

FIG. 7B shows a working machine state preparation screen. The working machine state preparation screen is displayed when the initial posture confirmation selection section F7A4 (see FIG. 7A) is selected. The working machine state preparation screen is displayed, for example, after a work plan (instruction data) is finalized. The working machine state preparation screen includes a condition notification section F7B1 and a condition confirmation selection section F7B2. The condition notification section F7B1 notifies (displays) an automatic operation mode start condition other than the condition that the working machine 10 is changed to the initial posture. The condition notification section F7B1 notifies to turn off the engine (i.e., switch the engine to a non-operation state). The condition notification section F7B1 notifies the operator of the necessity to go sufficiently far away from the working machine 10. The condition notification section F7B1 notifies to turn off the key (i.e., to power off). The condition notification section F7B1 notifies to disconnect a remotely-controlling device from the working machine 10, when the working machine 10 is in a remotely-controllable state (e.g., when an instruction is made through a remote operation). The condition notification section F7B1 notifies to power on the emergency stop switch (not illustrated). The emergency stop switch is a switch held by an operator around the working machine 10, and is used to stop the working machine 10 in emergency. The condition confirmation selection section F7B2 is a section (OK button) which is selected when a condition displayed in the condition notification section F7B1 is satisfied. The condition confirmation selection section F7B2 may be inactive when the automatic operation mode start condition is not satisfied, and may be active when the automatic operation mode start condition is satisfied.

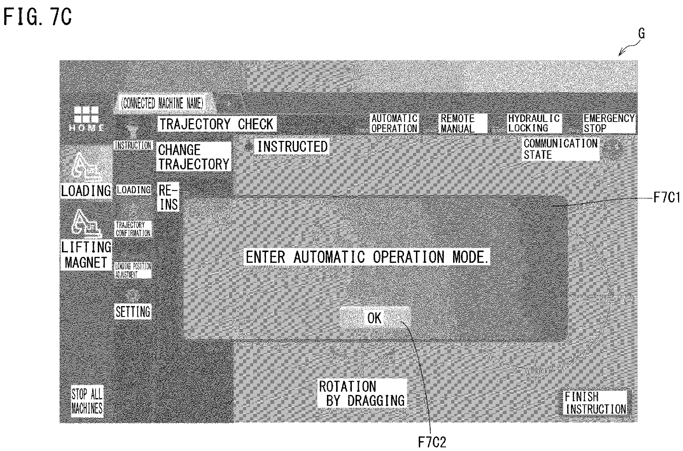

FIG. 7C shows an automatic operation mode start notification screen. The automatic operation mode start notification screen is displayed when automatic operation mode starts. The automatic operation mode start notification screen is displayed when the condition notification section F7B1 (see FIG. 7B) is selected. The automatic operation mode start notification screen includes a start notification section F7C1 and a start confirmation selection section F7C2. The start notification section F7C1 is a section which notifies that the automatic operation mode starts. The start confirmation selection section F7C2 is a section (OK button) which is selected when the start of the automatic operation mode is confirmed.

As with the start notification section F7C1, a notification section for which a confirmation operation (e.g., pressing an OK button) must be made by the operator to proceed a process may be displayed in the display image G at various timings other than the start of the automatic operation mode. Such a notification section may be displayed, for example, at the start or end of an instruction, at the start or end of a change of a trajectory, and at the start or end of each of later-described processes. Specific examples of the confirmation operation made for the notification section may be an operation of pressing an OK button (operation of selecting a selection section) and an operation of pressing an OK button after checking a checkbox.

### (Initial Setting)

FIG. 8 shows an automatic operation initial setting screen. The automatic operation initial setting screen is a screen for performing initial setting related to automatic operation. For example, the automatic operation initial setting screen is displayed after the operating mode of the working machine 10 is switched to the automatic operation mode. (For example, this screen is the first screen displayed after the switching.) For example, the automatic operation initial setting screen is displayed when the loading function selection section B2 is selected. (For example, the screen is the first screen displayed after the selection.) The automatic operation initial setting screen includes an operation setting section F8A1 and an initial setting completion selection section F8A2. The operation setting section F8A1 is a section for allowing the operator to set up automatic operation. The operation setting section F8A1 includes an operation count setting section C1, a target operation amount setting section C2, and an operation speed setting section SS. The initial setting completion selection section F8A2 is a section (OK button) which is selected when the initial setting of automatic operation is completed.

The operation count setting section C1 allows the operator to set how many times an automatic operation is performed (operation count, how many cycles an automatic operation is performed). As described above, being similar to the selection, the setting is performed by the operator by operating the input unit 23i. The setting may be performed in the same manner as the specific example of the selection, e.g., by inputting a number. The operation count setting section C1 has a section (set value display section) where an operation count is displayed. The operation count setting section C1 may have a section (input box) in which an operation count can be numerically input. A single section may be used as both the input box and the set value display section. (The same applies to the target operation amount setting section C2.) The operation count setting section C1 includes a selection section (+ button) with which the operation count is increased and a selection section (-button) with which the operation count is decreased.

The target operation amount setting section C2 is a section which allows the operator to set an amount of an operation target to be released (i.e., a target operation amount) in an operation in which the working machine 10 moves and releases the operation target having been caught. For example, the target operation amount may be the mass or volume of the operation target. The target operation amount is, for example, the amount of soil loaded onto a vehicle in a loading task. The target operation amount setting section C2 includes a section (set value display section) which displays a target operation amount. The target operation amount setting section C2 may include a section (input box) in which a numerical value of a target operation amount can be input. The target operation amount setting section C2 includes a selection section (+ button) with which the target operation amount is increased and a selection section (- button) with which the target operation amount is decreased.

The operation speed setting section SS is a section by which the operator sets the operation speed in the automatic operation. The operation speed setting section SS displays plural stages of operation speeds so that one of them can be selected as the operation speed in the automatic operation. These stages of operation speeds include an operation speed of the working machine 10 in instruction data (i.e., an operation speed in teaching). The plural stages may be three stages (high speed, middle speed, and low speed) as in the example shown in FIG. 8, two stages, or four or more stages.

Among the stages of operation speeds selectable in the operation speed setting section SS, the fastest operation speed (third speed setting section SS3) is preferably the operation speed of the working machine 10 in the instruction data. In this case, the operation speed in the automatic operation is never faster than the instructed operation speed. The operation speed in the automatic operation is therefore equal to or lower than the speed intended by an operator who performed the instruction, and is equal to or lower than the speed assumed by an operator who saw the instruction.

Among the stages of operation speeds selectable in the operation speed setting section SS, the fastest operation speed (third speed setting section SS3) may be higher than the operation speed of the working machine 10 in the instruction data. This makes it possible to improve the working efficiency of the automatic operation by the working machine 10. For example, it is possible to achieve the following arrangement: the working machine 10 is reliably operated with a slow operation speed in the instruction and the working machine 10 is efficiently operated in automatic operation with an operation speed faster than that in the instruction.

With the operation speed setting section SS, it is possible to set the operation speed in the automatic operation in the following manner. The operation speed setting section SS may include plural selection sections that allow the operator to select an operation speed in automatic operation from plural stages of operation speeds. In the example shown in FIG. 8, the operation speed setting section SS includes a first speed setting section SS1 (low speed), a second speed setting section SS2 (middle speed), and a third speed setting section SS3 (high speed). The operation speed setting section SS may allow the operator to set the operation speed in automatic operation by inputting a number (not illustrated; the section is similar to the operation count setting section C1 and the target operation amount setting section C2). The operation speed setting section SS may allow the operator to set the ratio (percentage) of the operation speed in automatic operation to the operation speed in instruction data. The operation speed setting section SS may allow the operator to set the ratio (percentage) of the operation speed in automatic operation to the fastest operation speed among plural stages of operation speeds (i.e., an operation speed equal to or higher than the operation speed in the instruction data).

The operation speed setting section SS may allow the operator to set the operation speed in each work phase P. To be more specific, when there are plural work phases P in one cycle of automatic operation, the operation speed setting section SS is displayed for each work phase P. In the example shown in FIG. 8, one cycle of automatic operation consists of four work phases P. Specifically, for example, the work phases P include a catching phase P1 (excavation phase), a lifting turning phase P2 (soil discharge turning phase), a release phase P3 (soil discharge phase), and a return turning phase P4. For each of the four work phases P, the first speed setting section SS1, the second speed setting section SS2, and the third speed setting section SS3 are displayed.

A state in which all stages of the operation speeds in each of the work phases P are displayed in the display image G (i.e., the state shown in FIG. 8) will be regarded as a first speed display state SP1.

After the operation speed is set by the operation speed setting section SS, the control unit 23c instructs the working machine 10 to perform automatic operation at the operation speed set by the operation speed setting section SS. The control unit 23c instructs the working machine 10 to perform automatic operation at the operation speed set for each work phase P by the operation speed setting section SS.

### (Setting Before Start of Automatic Operation)

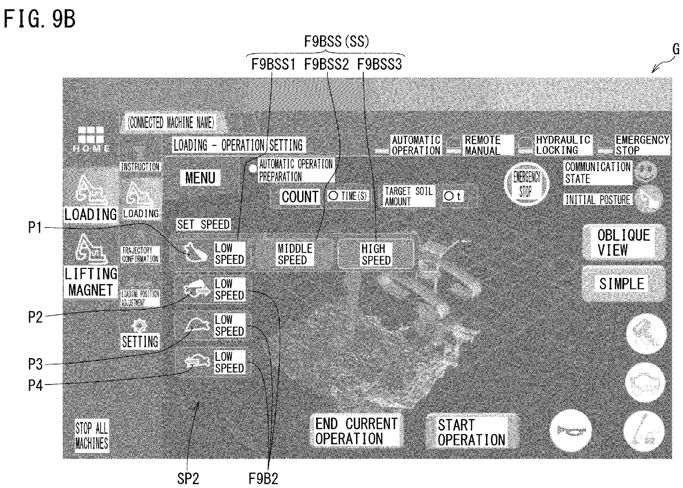

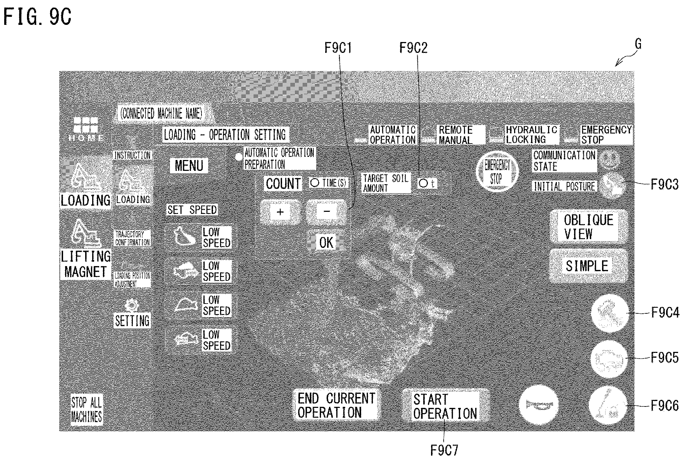

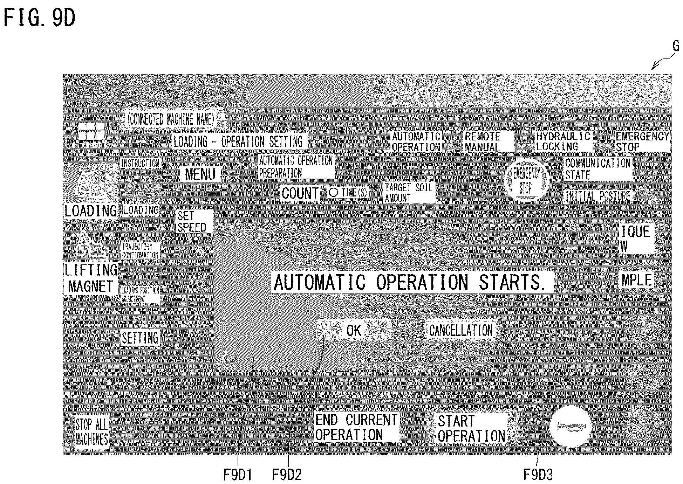

FIG. 9A shows a before automatic operation start screen. The before automatic operation start screen is displayed after initial setting (see FIG. 8) of automatic operation is completed. The before automatic operation start screen is displayed when the initial setting completion selection section F8A2 (see FIG. 8) is selected. The before automatic operation start screen may be displayed when the start of automatic operation is canceled (i.e., when the cancellation selection section F9D3 shown in FIG. 9D is selected), or may be displayed when setting change (see FIG. 9B and FIG. 9C) is completed. The before automatic operation start screen includes a current state display section F9A1, an operation count setting display section F9A2, a target operation amount display section F9A3, and an operation speed display section F9A4.

The current state display section F9A1 indicates that preparation for starting automatic operation is in progress. The operation count setting display section F9A2 is a section in which the operation count having been set is displayed. This operation count having been set is the operation count set in the initial setting (see FIG. 8). However, if the operation count set in the initial setting is changed (see FIG. 9C), the operation count having been set is the operation count after the change. The target operation amount display section F9A3 is a section in which a target operation amount (target soil amount) having been set is displayed. This target operation amount having been set is the operation count set in the initial setting (see FIG. 8). However, if the target operation amount set in the initial setting is changed, the target operation amount having been set is the target operation amount after the change.

The operation speed display section F9A4 shows the operation speed having been set. The operation speed having been set is the operation speed in automatic operation, which is set in the initial setting (see FIG. 8). However, if the operation speed in automatic operation, which is set in the initial setting, is changed (see FIG. 9B), the operation speed having been set is the operation speed after the change. The operation speed display section F9A4 displays the operation speed in each work phase P. Hereinafter, unless otherwise specified, the operation speed in automatic operation is simply referred to as operation speed.

FIG. 9B shows an operation speed change screen. The operation speed change screen is displayed when the operation speed having been set is changed. Such a change of the operation speed may be performed for each work phase P, or may be performed for the entire cycle (i.e., for plural work phases P altogether). The following will describe a case where the operation speed is changed for each work phase P. The operation speed change screen includes an operation speed setting section F9BSS and an operation speed display section F9B2. The operation speed setting section F9BSS displays, for a selected work phase P, plural stages (candidates) of operation speeds so that the operation speed in the automatic operation can be set (can be changed). On the other hand, for a non-selected work phase P, the operation speed having been set is displayed in the operation speed display section F9B2 (in the same manner as in the operation speed display section F9A4 shown in FIG. 9A).

The following will describe a specific example of a manipulation and an image of the operation speed setting section F9BSS. In the operation speed display section F9A4 shown in FIG. 9A, a work phase P (e.g., the catching phase P1) is selected as a target of change. In doing so, an image in which an operation speed setting section F9BSS of the selected work phase P (catching phase P1) is drawn out (e.g., drawn out rightward) as shown in FIG. 9B from the operation speed display section F9A4 of the selected work phase P may be displayed. For example, when one of three stages of operation speeds can be set (can be selected), a first speed setting section F9BSS1 (low speed), a second speed setting section F9BSS2 (middle speed), and a third speed setting section F9BSS3 (high speed) are displayed for the selected work phase P (catching phase P1). When the operation speed is set by the operation speed setting section F9BSS, the operation speed setting section F9BSS is no longer displayed (i.e., is closed) and the operation speed display section F9A4 shown in FIG. 9A is displayed (again).

As shown in FIG. 9B, there is a case where the operation speed display section F9B2 of a non-selected work phase P is selected when the operation speed setting section F9BSS of a selected work phase P (e.g., the catching phase P1) is displayed (i.e., is open). In such a case, in regard to the selected work phase P (catching phase P1), the operation speed setting section F9BSS is no longer displayed (is closed) and the operation speed display section F9A4 (see FIG. 9A) is displayed (again). On the other hand, regarding a newly-selected work phase P, the displayed operation speed display section F9B2 is switched to the operation speed setting section F9BSS (i.e., the operation speed setting section F9BSS is opened).

As shown in FIGs. 9A and 9B, a state in which an operation speed of only a stage set by the operation speed setting section SS (see FIG. 8 and FIG. 9B) in at least one work phase P of work phases P is displayed is regarded as a second speed display state SP2. To be more specific, in the example shown in FIG. 9A, the operation speed display section F9A4 displays an operation speed of only a stage set by the operation speed setting section SS in all of work phases P. In the example shown in FIG. 9B, the operation speed display section F9B2 displays an operation speed of only a stage set by the operation speed setting section SS in a work phase P (which is not the catching phase P1) among work phases P. It is noted that, after the second speed display state SP2 is established, the display image G may shift to the first speed display state SP1 (i.e., may return to the initial setting).

FIG. 9C shows an operation count change screen. The operation count change screen is displayed when the operation count having been set is changed. The operation count change screen includes an operation count change section F9C1 and a target operation amount display section F9C2. The operation count change section F9C1 is displayed when the operation count setting display section F9A2 shown in FIG. 9A is selected. For example, when the operation count setting display section F9A2 is selected, an image in which the operation count change section F9C1 shown in FIG. 9C is drawn out (e.g., drawn out downward) from the operation count setting display section F9A2 is displayed. The operation count change section F9C1 is displayed to allow the operator to change the operation count. For example, the operation count change section F9C1 may include a selection section (+ button) with which the operation count is increased and a selection section (- button) with which the operation count is decreased, and may include a section in which an operation count after the change can be numerically input. The operation count change section F9C1 includes a determination selection section (OK button) by which a change of the operation count is determined. When this determination selection section is selected, the operation count change section F9C1 is no longer displayed (i.e., is closed), and the operation count setting display section F9A2 (see FIG. 9A) is displayed (again). Likewise, when another part (e.g., the target operation amount display section F9C2) of the display image G is selected while the operation count change section F9C1 is displayed, the operation count change section F9CT1 is no longer displayed and the operation count setting display section F9A2 (see FIG. 9A) is displayed (again).

Being similar to the change of the operation count by the operation count change section F9C1, the target operation amount may be changeable. For example, when the target operation amount display section F9C2 is selected, a section (target operation amount change section) for changing the target operation amount may be displayed.

The operation speed, the operation count, and the target operation amount may be changeable only when the working machine 10 does not perform automatic operation (e.g., automatic operation is in preparation). The operation speed, the operation count, and the target operation amount may be changeable when the working machine 10 performs automatic operation (e.g., at the same time as automatic operation).

The screen shown in FIG. 9C includes an initial posture preparation completion notification section F9C3, a key state selection section F9C4, an engine state selection section F9C5, a lever lock state selection section F9C6, and an operation start selection section F9C7. The initial posture preparation completion notification section F9C3 displays whether the working machine 10 is in the initial posture in a distinguishable manner for the operator (in the same manner as the initial posture preparation completion notification section F7A3 shown in FIG. 7A). The working machine 10 is assumed to be in the initial posture when switching to the automatic operation mode. The operator is allowed to check if the working machine 10 is maintained in the initial posture by the initial posture preparation completion notification section F9C3. The key state selection section F9C4 is a section that is selected when the state of the key is switched between on and off. The key state selection section F9C4 is also a section that displays the state of the key (i.e., a key state display section). The engine state selection section F9C5 is selected when the state of the engine is switched between on (RUN) (operating state) and off (stop state). The engine state selection section F9C5 is also a section that displays the state of the engine (i.e., an engine state display section). The lever lock state selection section F9C6 is selected when the state of the lever lock is switched between a locked state (state in which the working machine 10 cannot be operated) and a released state (state in which the working machine 10 can be operated). The lever lock state selection section F9C6 is also a section that displays the state of the lever lock (i.e., a lever lock state display section).

A condition of starting automatic operation (automatic operation start condition) may be variously set. For example, the automatic operation start condition includes at least one of the following conditions: the operating mode of the working machine 10 is the automatic operation mode; the working machine 10 is in the initial posture; the key is switched on; the engine is switched on; and the lever lock is in the released state. In the example shown in FIG. 9C, the key is switched off, the engine is switched off, and the lever lock is in the locked state, and hence the automatic operation start condition is not satisfied. Therefore, the information terminal 23 is operated by the operator to satisfy the automatic operation start condition. To be more specific, for example, the key state selection section F9C4 is selected and the key is switched off to on. The engine state selection section F9C5 is selected, and the engine is switched from off to on (RUN). The lever lock state selection section F9C6 is selected, and the lever lock is changed from the locked state to the released state. When at least one of the key state selection section F9C4, the engine state selection section F9C5, or the lever lock state selection section F9C6 is being operated, a confirmation screen (similar to the screen shown in FIG. 7C) may be displayed. For example, when the engine is switched on from off, a change of the state of the working machine 10, e.g., turning on the engine, may be notified. In addition to this, the necessity to confirm that there are no people around the working machine 10 may be notified.

The relationship between the state of the key and the state of the engine may be set in various ways. For example, the condition with which the engine is switched on may include a condition that the key is switched on. When the key is switched on, the engine may be automatically switched on. When the engine is switched from on to off, the key may be switched off, or may be maintained to be on.

The operation start selection section F9C7 is a section that is selected when automatic operation starts. For example, the operation start selection section F9C7 may be active when the automatic operation start condition is satisfied, and may be inactive when the automatic operation start condition is not satisfied.

FIG. 9D shows a before automatic operation start confirmation screen. The before automatic operation start confirmation screen is displayed before (e.g., immediately before) automatic operation starts. The before automatic operation start confirmation screen is displayed when the operation start selection section F9C7 (see FIG. 9C) is displayed. The before automatic operation start confirmation screen includes an automatic operation start notification section F9D1, a start selection section F9D2, and a cancellation selection section F9D3. The automatic operation start notification section F9D1 is a section which notifies (displays) that the automatic operation starts. The start selection section F9D2 is a section (OK button) which is selected when the automatic operation starts. The cancellation selection section F9D3 is a section (cancellation button) that is selected when automatic operation does not start.

### (During Automatic Operation)

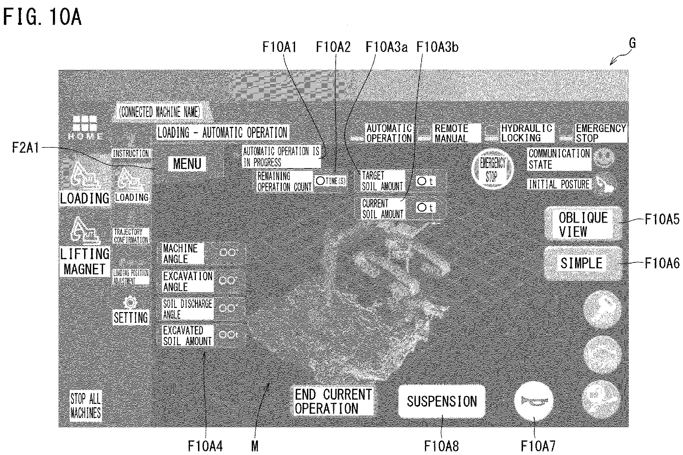

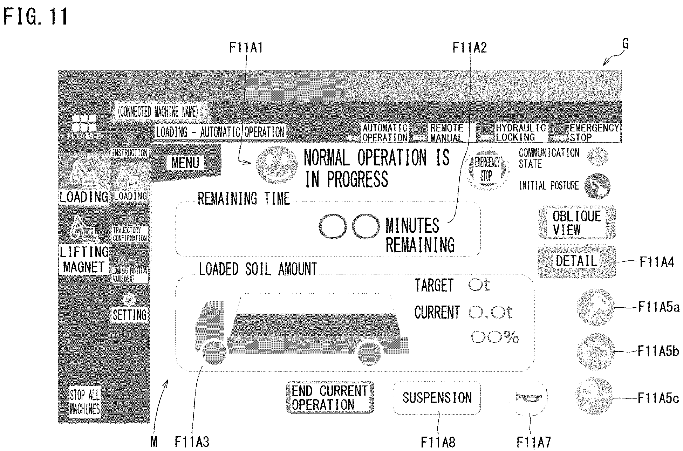

FIG. 10A shows a during automatic operation screen (first screen, during automatic operation detail screen). The during automatic operation screen is displayed during automatic operation. The during automatic operation screen may be displayed when the working machine 10 is waiting (on standby). The during automatic operation screen may be displayed when the working machine 10 is stopped in emergency (in a state of emergency stop). The during automatic operation screen includes a current state display section F10A1, a remaining operation count display section F10A2, a target operation amount display section F10A3a, and a current operation amount display section F10A3b. The during automatic operation screen includes a machine information display section F10A4, a viewpoint change selection section F10A5, a simple screen selection section F10A6, an alarm operation section F10A7, and a suspension selection section F10A8. The current state display section F10A1 displays information indicating that the working machine 10 is being automatically operated. The remaining operation count display section F10A2 is a section which displays the remaining number of times of automatically performing the operation. This remaining number of times of performing the operation is calculated by subtracting a completed operation count from an operation count (number of cycles) having been set. A task remaining time display section F11A2 (see FIG. 11) may be displayed. The target operation amount display section F10A3a is similar to the target operation amount display section F9A3 shown in FIG. 9A. The current operation amount display section F10A3b is a section that displays information regarding an amount of an operation target having already been processed (processed operation amount) (e.g., an amount of soil having already been loaded). The current operation amount display section F10A3b may display a processed operation amount or a content corresponding to the processed operation amount. The current operation amount display section F10A3b may display the ratio (percentage) of a processed operation amount to a target operation amount.

The machine information display section F10A4 is a section which displays information regarding the working machine 10. For example, the machine information display section F10A4 displays information which is detected either by a sensor mounted on the working machine 10 or by a sensor provided outside the working machine 10. The machine information display section F10A4 may display, for example, information of an angle regarding an operation (e.g., a turning angle or an angle relative to a horizontal direction). The machine information display section F10A4 may display information regarding an amount of an operation target, e.g., an amount (e.g., an excavated soil amount) of an operation target caught (excavated) by the working machine 10 in one cycle. The viewpoint change selection section F10A5 is a section that is selected when a viewpoint of, for example, a figure indicating the working machine 10 displayed in the main display area M is changed. Each time the viewpoint change selection section F10A5 is selected, the viewpoint of the working machine 10 displayed in the main display area M may be switched. The viewpoint change selection section F10A5 may be displayed for each viewpoint of the working machine 10 displayed in the main display area M. (For example, plural buttons may be provided.) The viewpoints of the working machine 10 displayed in the main display area M may encompass a viewpoint (oblique viewpoint) at which the working machine 10 is viewed from obliquely above, a viewpoint (see FIG. 5) at which the machine is viewed in a horizontal direction, and a viewpoint (see FIG. 5) at which the machine is viewed from above.

The simple screen selection section F10A6 is a section that is selected when the display image G is switched to the during automatic operation simple screen (second screen) (see FIG. 11). The alarm operation section F10A7 is a section that is selected when causing the working machine 10 to sound the alarm. The suspension selection section F10A8 is a section that is selected when automatic operation is suspended (details will be given below).

FIG. 10B shows a display setting screen. The display setting screen is shown when, for example, the menu selection section F2A1 (see FIG. 10A) is selected and an unillustrated predetermined menu item is selected. The display setting screen includes a display setting section F10B1. The display setting section F10B1 is a section where setting regarding elements (contents) displayed in the main display area M is performed. The display setting section F10B1 is a section where the status (e.g., presence or absence) of display of elements in the main display area M is set. The display setting section F10B1 includes, for example, a checkbox or a switch provided for each element for which the element is displayed or not is determined. The elements whose status of display in the main display area M can be set by the display setting section F10B1 include, for example, at least one of an instructed trajectory (a target route PA shown in FIG. 10D), an actual operation trajectory PB (see FIG. 10D), a transportation vehicle (dump truck) detection area, or an image taken by an imaging device. The actual operation trajectory PB is a trajectory of the specific part of the attachment 15 when the working machine 10 actually performs a task automatically. The transportation vehicle (dump truck) detection area is a range of locations where a transportation vehicle (dump truck) into which an operation target is loaded is detected. The above-described image taken by the imaging device is an image taken by an imaging device provided at the working machine 10 or outside the working machine 10 (e.g., at a work site). The image taken by the imaging device may be an image taken by a two-dimensional camera or a three-dimensional image (e.g., a point cloud image) taken by an apparatus (e.g., a LiDAR or a stereo camera) configured to obtain three-dimensional information. In an example shown in FIG. 10B, elements (contents) displayed in the main display area M are a three-dimensional image representing the working machine 10 and a point cloud image.

FIG. 10C shows a sensor state confirmation screen. The sensor state confirmation screen is shown when, for example, the menu selection section F2A1 (see FIG. 10A) is selected and an unillustrated predetermined menu item is selected. The sensor state confirmation screen includes a sensor state display section F10C1. The sensor state display section F10C1 displays the state of a sensor provided at the working machine 10 or outside the working machine 10. The sensor state display section F10C1 may display, for example, whether the sensor is normal or not, or may display a content obtained by the sensor. The sensor whose state is displayed by the sensor state display section F10C1 may be an angular sensor of each element (the boom 15a, the arm 15b, and the leading-end attachment 15c) of the attachment 15. The sensor whose state is displayed by the sensor state display section F10C1 may be an imaging device (e.g., a LiDAR or a camera), an automatic operation controller of the working machine 10, or a controller different from the automatic operation controller of the working machine 10.

FIG. 10D shows a during automatic operation screen which includes, for example, a work phase display section PD. The during automatic operation screen including the work phase display section PD, etc. is displayed when, for example, an option to display a target route PA (instructed trajectory in FIG. 10B) is selected in the display setting section F10B1 shown in FIG. 10B. The during automatic operation screen including the work phase display section PD, etc. includes a target route PA, an actual operation trajectory PB, a target range TA, a work phase display section PD, a work phase text display section F10D1, and an explanatory note F10D2.

As described above, the target route PA is a target route of the specific part of the attachment 15 (e.g., the leading end portion of the leading-end attachment 15c). The target route PA is displayed in the main display area M. The target route PA is displayed as a line. For example, plural types of target routes PA are set to correspond to work phases P, respectively. Specifically, for example, the target routes PA include a catching target route PA1, a lifting turning target route PA2, a releasing target route PA3, and a returning turning target route PA4. The catching target route PA1 is a target route PA in the catching phase P1. The lifting turning target route PA2 is a target route PA in the lifting turning phase P2. The releasing target route PA3 is a target route PA in the release phase P3**.** The returning turning target route PA4 is a target route PA in the return turning phase P4**.**

The status of display of each of types of target routes PA (the catching target route PA1, the lifting turning target route PA2, the releasing target route PA3, and the returning turning target route PA4) may be different between the types. For example, the color of the target route PA (e.g., at least one of hue, concentration, brightness, and saturation) may be different between the types of the target routes PA. For example, the type (thickness, solid line, dotted line, etc.) of the line representing the target route PA may be different between the types of the target routes PA.

An image (specifically a line) showing the target route PA may indicate the orientation of the target route PA. The orientation of the target route PA is the orientation of the movement of the specific part of the attachment 15 when the specific part moves along the target route PA. For example, an image showing the target route PA may include an arrow, a moving image moving in the orientation of the target route PA, and so on.

The actual operation trajectory PB is a trajectory of the attachment 15 when the working machine 10 actually performs a task automatically. The actual operation trajectory PB is displayed in the main display area M. The actual operation trajectory PB is displayed at locations (trajectory) where the attachment 15 of the working machine 10 displayed in the main display area M passes. The actual operation trajectory PB may be, for example, the trajectory (e.g., a line) of a specific part of the attachment 15 (e.g., the leading end portion of the leading-end attachment 15c), or the trajectory of the entire leading-end attachment 15c.

The actual operation trajectory PB and the target route PA are displayed in an overlapped manner. This overlapping display allows the operator to confirm whether the specific part of the attachment 15 is performing an operation along the target route PA (i.e., an operation corresponding to the target of automatic operation).

The actual operation trajectory PB is displayed to be distinguishable from the target route PA. The status of display of the actual operation trajectory PB is different from the status of display of the target route PA. For example, the color (e.g., hue) of the displayed actual operation trajectory PB is different from the color (e.g., hue) of the displayed target route PA. The color of the actual operation trajectory PB may be a single color or plural colors (e.g., color gradation). The status of display of the actual operation trajectory PB may be different depending on each type of the work phase P performed by the working machine 10 (i.e., the currently-performed work phase P).

The actual operation trajectory PB may be displayed in amination. For example, part of the actual operation trajectory PB may be deleted from the display image G when a predetermined condition (trajectory display condition) becomes no longer satisfied. As the part of the actual operation trajectory PB is deleted, it is possible to suppress the occurrence of a problem of insufficient visibility of the display image G due to excessive image display of the actual operation trajectory PB. Specifically, for example, the actual operation trajectory PB may be arranged such that, when a predetermined time (trajectory display time) elapses from a time point at which the specific part of the attachment 15 passes through a particular location, a part of the actual operation trajectory PB at this particular location is deleted. This trajectory display time may be a fixed period of time set in advance, or may be optionally set by the operator.

The target range TA is a target range of an operation automatically performed by the working machine 10. The target range TA is displayed in the main display area M. Plural sets of target ranges TA are set. Specifically, for example, the target ranges TA include a target catch range TA1 and a target release range TA3. The target catch range TA1 is a range (e.g., a planned excavation area) where the working machine 10 (the leading-end attachment 15c) catches an operation target in the catching phase P1. The target release range TA3 is a range (e.g., a planned soil discharge area) where the working machine 10 (the leading-end attachment 15c) releases an operation target in the release phase P3.

The status of display of each of types of target ranges TA (the target catch range TA1 and the target release range TA3) may be different between the types. For example, the color (e.g., hue) of the target range TA may be different between the types of the target ranges TA. The status of display of each type of target range TA may correspond to the status of display of a type of target route PA corresponding to that type of target range TA. Specifically, for example, the status (e.g., hue) of display of the target catch range TA1 may be identical with (or substantially identical with) the status (e.g., hue) of display of the catching target route PA1. Furthermore, for example, the status of display of the target release range TA3 may be identical with (or substantially identical with) the status of display of the releasing target route PA3. To be more specific, assume that the catching target route PA1 is orange in color and the releasing target route PA3 is green in color. In this case, the target catch range TA1 may be orange in color and the target release range TA3 may be green in color. The status of display of each type of target range TA may not correspond to the status of display of a type of target route PA corresponding to that type of target range TA**.**

The work phase display section PD displays information indicating to which type of work phase P among plural types of work phases P a task that is being (automatically) performed by the working machine 10 belongs. Hereinafter, a work phase P that is displayed by the work phase display section PD and corresponds to a task performed by the working machine 10 may be referred to as a currently-performed work phase P. The work phase display section PD displays information that allows the operator to easily grasp a currently-performed work phase P. The work phase display section PD displays the currently-performed work phase P and other types of work phases P in a distinguishable manner for the operator.

The work phase display section PD may include images of target routes PA**.** To be more specific, the status of display of the target route PA may be different between a target route PA (e.g., the catching target route PA1) of a type corresponding to the currently-performed work phase P (e.g., the catching phase P1) and other types of target routes OA. The status of display changed in this case may be the color of the target route PA (e.g., at least one of hue, concentration, brightness, and saturation), or the type of the line indicating the target route PA. Specifically, for example, the brightness of the target route PA of the type corresponding to the currently-performed work phase P may be high and the brightness of the other types of the target routes PA may be low (grayed out).

The work phase display section PD may include images of actual operation trajectories PB. To be more specific, for example, the status (e.g., hue) of display of the actual operation trajectory PB may be different between the types of currently-performed work phases P. The status of display of the actual operation trajectory PB may be changed each time the type of the currently-performed work phase P is changed.

The work phase display section PD may include images of target ranges PA. To be more specific, the status of display of the target range TA may be different between a target range TA (e.g., the target catch range TA1) of a type corresponding to the currently-performed work phase P and other types of target ranges TA (e.g., the target release range TA3). The status of display to be differentiated may be the color (e.g., hue) inside the target range TA, the color of the outer frame of the target range TA, or the type of the line indicating the outer frame of the target range TA. Specifically, for example, the brightness of the target range TA of the type corresponding to the currently-performed work phase P may be high and the brightness of the other types of the target routes PA may be low (grayed out).

The work phase display section PD may include an image of the working machine 10. To be more specific, for example, the status of display of part of or all of the working machine 10 may be different between the types of currently-performed work phases P. The status of display of part of or all of the working machine 10 may be changed each time the type of the currently-performed work phase P is changed. When the status of display of only part of the working machine 10 is different between the types of currently-performed work phases P, a part whose status of display is differentiated may be only the attachment 15 or only the leading-end attachment 15c.

For example, as described above, the color of the target route PA (e.g., hue) may be differentiated between the types of the target routes PA. In this case, the color of display of part of or all of the working machine 10 may be identical with or substantially identical with the color of the target route PA of the type corresponding to the currently-performed work phase **P.** To be more specific, for example, assume that the catching target route PA1 is orange in color, the lifting turning target route PA2 is blue in color, and the releasing target route PA3 is green in color. In this case, when the currently-performed work phase P is the catching phase P1, part of or all of the working machine 10 is displayed in orange. When the currently-performed work phase P is the lifting turning phase P2, part of or all of the working machine 10 is displayed in blue. When the currently-performed work phase P is the release phase P3, part of or all of the working machine 10 is displayed in green.

The work phase display section PD may include a work phase text display section F10D1. The work phase text display section F10D1 displays a text indicating the currently-performed work phase P. The status (e.g., color) of display of the work phase text display section F10D1 may be arranged to be identical or substantially identical with the status (e.g., color) of display of the target range TA of the type corresponding to the currently-performed work phase P.

The work phase display section PD may include the entire display image G, and may include the entire main display area M. To be more specific, the status (e.g., color) of display of the entire display image G or the status (e.g., color) of display of the entire main display area M may be different between the types of the currently-performed work phases P. The status (e.g., color) of display of the entire display image G or the entire main display area M may be arranged to be identical or substantially identical with the status (e.g., color) of display of the target route PA (or the target range TA) of the type corresponding to the currently-performed work phase P.

The work phase display section PD may display information indicating the type of a work phase P performed after the currently-performed work phase P, in the same manner as information indicating the type of the currently-performed work phase P. In this case, the work phase display section PD may display the currently-performed work phase P and the subsequent work phase P in a manner in which they are distinguishable in type.

The explanatory note F10D2 indicates to which type of the work phase P images (of the target route PA, for example) shown in various statuses in accordance with the types of the work phases P correspond. For example, in the example shown in FIG. 10D, the explanatory note F10D1 indicates the relationship between the status of display of plural types of target routes PA and the types of work phases P. For example, the explanatory note F10D2 may indicate the relationship between the hue of the target route PA and the type of the work phase P (i.e., indicates which color corresponds to which work phase P). The explanatory note F10D1 may indicate the relationship between the status (e.g., color) of display of an item different from the target route PA (e.g., the target range TA or the actual operation trajectory PB) and the type of the work phase P.

### (Simple Screen Display During Automatic Operation)

FIG. 11 shows a during automatic operation simple screen (second screen). The during automatic operation simple screen is displayed during automatic operation. The during automatic operation simple screen may be displayed when the working machine 10 is waiting (on standby). The during automatic operation simple screen may be displayed when the working machine 10 is stopped in emergency (in a state of emergency stop). The display image G can display the during automatic operation screen (during automatic operation detail screen, this may be simply referred to as detail screen) shown in FIG. 10A and the during automatic operation simple screen shown in FIG. 11, in a switchable manner. For example, the during automatic operation simple screen is displayed when a simple screen selection section F10A6 (see FIG. 10A) is selected in a detail screen (see FIG. 10A). The during automatic operation simple screen may be displayed when the simple screen selection section F10A6 is selected only once (i.e., displayed by one action). The during automatic operation simple screen may be displayed when a confirmation operation (e.g., pressing an OK button) is performed after the selection of the simple screen selection section F10A6.

There may be a case where the operator cannot observe the display image G while, for example, the operator is performing another task. This "another task" is a task different from a task performed by the working machine 10 whose information is displayed in the display image G. A specific example of the another task is a task performed by using a machine (e.g., shovel) that is not connected to the information terminal 23. The another task may be a manual or remote operation of a machine. There is a case where the operator wishes to grasp the state of a task automatically performed by the working machine 10 with a short viewing time (e.g., periodically), while performing another task. For example, the operator may wish to grasp the progress and an estimated time to completion of the automatically-performed task. However, when the operator cannot closely observe the display image G, the amount of information in the detail screen (see FIG. 10A) is large. Therefore, it may be difficult for the operator to check the necessary information with the short viewing time.

For this reason, the display image G displays the during automatic operation simple screen. As compared to the detail screen (see FIG. 10A), the during automatic operation simple screen is arranged to allow the operator to grasp the information with a short viewing time. To be more specific, the amount of information displayed in the during automatic operation simple screen is smaller than the amount of information displayed in the detail screen. The information regarding automatic operation displayed in the during automatic operation simple screen includes only part of information regarding automatic operation displayed in the detail screen. To be more specific, for example, as shown in FIG. 11, the machine information display section F10A4 and an image (e.g., a point cloud image) of a work site displayed in the main display area M shown in FIG. 10A are not displayed in the during automatic operation simple screen. Because the during automatic operation simple screen is displayed as the display image G, the operator can obtain information regarding automatic operation of the working machine 10 even with a glance of the display image G. As a result, for example, even when the operator observes the display image G while performing another task (such as manually operating or remotely operating the machine), the operator can monitor the operation of the working machine 10 without significantly impairing the efficiency of the another task (i.e., can perform both the another task and the monitoring of the automatic operation).

The image displayed in the during automatic operation simple screen is preferably simpler (more basic) than the image displayed in the detail screen (see FIG. 10A). For example, an information display displayed in the during automatic operation simple screen may be larger than an information display displayed in the detail screen. This information display may be a text or a figure (illustration visually representing information). In the during automatic operation simple screen, the difference (contrast) in brightness between the information display and the background color of the information display may be larger than the contrast between the information display and the background color in the detail screen. The information displayed in the form of text in the detail screen may be displayed in the form of figure in the during automatic operation simple screen (see, e.g., a later-described current operation amount display section F11A3). The during automatic operation simple screen may include a part not included in the detail screen (e.g., a task remaining time display section F11A2 and a detail screen selection section F11A4 which will be described later) .

The contents (elements and items) displayed in the during automatic operation simple screen may be set by the operator or may be set in advance in the information terminal 23. The contents displayed in the during automatic operation simple screen preferably include information required for monitoring automatic operation by the operator, and are as small in number as possible (i.e., the contents are preferably minimum required). For example, the during automatic operation simple screen preferably includes a state display section F11A1 and images representing the progress of automatic operation (e.g., a task remaining time display section F11A2 and a current operation amount display section F11A3). The during automatic operation simple screen further includes a detail screen selection section F11A4, a key state selection section F11A5a, an engine state selection section F11A5b, a lever lock state selection section F11A5c, an alarm operation section F11A7, and a suspension selection section F11A8.

The state display section F11A1 is a section which displays the state of the working machine 10. The state display section F11A1 displays the state regarding automatic operation of the working machine 10. The state of the working machine 10 displayed in the state display section F11A1 includes, for example, at least one of a state in which a normal operation is in progress, a state of on standby (a state of on standby after the finish of an automatically-performed task), or a state of emergency stop. The state of the working machine 10 displayed in the state display section F11A1 may include a state in which a detection operation is in progress (i.e., a state in which the working machine 10 detects an object such as an operation target and is automatically operated).

When the state display section F11A1 displays information indicating that the working machine 10 is on standby, the operator is able to easily notice that the working machine 10 is on standby. As the operator instructs this working machine 10 to perform automatic operation, it is possible to reduce the time during which the working machine 10 does not perform any task (i.e., is on standby). It is therefore possible to improve the working efficiency of the working machine 10.

When the state display section F11A1 displays information indicating that the working machine 10 is in emergency stop, the operator is able to easily notice that the working machine 10 is in emergency stop. Therefore, the operator can handle the working machine 10 in emergency stop more quickly (for example, in a safer situation).

The state display section F11A1 is preferably displayed to allow the operator to easily notice a change in the state display section F11A1 even if the operator does not closely observe the display image G (e.g., peripheral vision). In this case, the operator can reduce the number of times and the duration of viewing the display image G. When the operator observes the display image G while performing another task, the working efficiency of the another task is improved as the number of times and the duration of viewing the display image G by the operator are reduced. For example, the occupancy rate of the state display section F11A1 in the display image G is preferably as large as possible. For example, the contrast between the state display section F11A1 and the background of the state display section F11A1 is preferably large.

The state display section F11A1 may display a text (phrase) indicating the state of the working machine 10. The text is, for example, "in normal operation" (or simply "in operation"), "on standby", or "in emergency stop". The state display section F11A1 may display a figure (e.g., the shape and color of a face) which is different depending on the state of the working machine 10. To be more specific, for example, the figure (e.g., a face figure) when the working machine 10 is in normal operation or on standby may be different from the figure when the working machine 10 is in emergency stop. The image display (e.g., text or figure) of the state display section F11A1 may be different in color depending on the state of the working machine 10. To be more specific, for example, the image display of the state display section F11A1 may be green when the machine is in normal operation, blue when the machine is on standby, and red when the machine is in emergency stop. The background color of the state display section F11A1 may be different depending on the state of the working machine 10.

The image display of parts other than the state display section F11A1 in the display image G may change depending on a change of the state of the working machine 10 indicated by the state display section F11A1. These "parts other than the state display section F11A1" may, for example, refer to the entire main display area M or the outer periphery (edge) of the main display area M. To be more specific, for example, in accordance with a change in the state of the working machine 10 indicated in the state display section F11A1, the color (background color or color of the edge) of the main display area M may change, or the brightness of the main display area M may change (e.g., the main display area M flickers). The state display section F11A1 may be displayed in the detail screen (see FIG. 10A).

The task remaining time display section F11A2 is a section which displays the remaining time of an automatically-performed task. In the same manner as a change of image display of the state display section F11A1 in accordance with the state of the working machine 10, image display (e.g., text color or background color) of the task remaining time display section F11A2 may change in accordance with the remaining time of an automatically-performed task. In the during automatic operation simple screen, the remaining operation count display section F10A2 (see FIG. 10A) may be displayed.

The current operation amount display section F11A3 displays a content similar to the content displayed in the current operation amount display section F10A3b shown in FIG. 10A. The current operation amount display section F11A3 shown in FIG. 11 is displayed so that information can be easily grasped by the operator as compared to the current operation amount display section F10A3b shown in FIG. 10A. For example, in the current operation amount display section F11A3 shown in FIG. 11, a displayed text may be large and the contrast between a text and its background color may be large as compared to the current operation amount display section F10A3b shown in FIG. 10A. The current operation amount display section F11A3 may change image display (e.g., text color or background color) in accordance with a current operation amount. Furthermore, the current operation amount display section F11A3 shown in FIG. 11 may display a figure showing the ratio (percentage) of a processed operation amount to a target operation amount. In accordance with this ratio (percentage), the current operation amount display section F11A3 changes the displayed image in plural steps (e.g., 5 steps). Specifically, for example, the current operation amount display section F11A3 displays a figure indicating an amount of soil loaded into the vehicle (dump truck). The figure of the current operation amount display section F11A3 may be displayed in the detail screen (see FIG. 10A). The detail screen selection section F11A4 is a section that is selected when the display image G is switched from the during automatic operation simple screen to the detail screen (FIG. 10A).

The key state selection section F11A5a, the engine state selection section F11A5b, and the lever lock state selection section F11A5c have similar functions as the key state selection section F9C4, the engine state selection section F9C5, and the lever lock state selection section F9C6 shown in FIG. 9C. The alarm operation section F11A7 shown in FIG. 11 is a section that is selected when causing the working machine 10 to sound the alarm. In this way, the during automatic operation simple screen may include a selection section used for operating the working machine 10. The suspension selection section F11A8 is a section that is selected when automatic operation is suspended (details will be given below) .

### (End Automatic Operation)

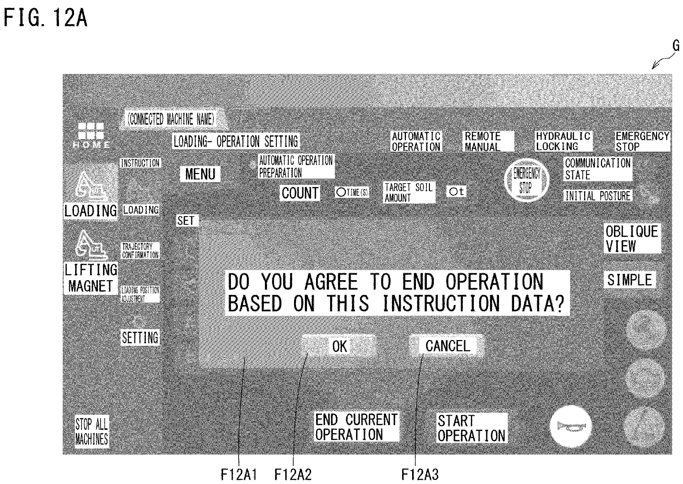

FIG. 12A shows an automatic operation end screen. The automatic operation end screen is displayed when an automatically-performed task is finished normally. For example, the automatic operation end screen is displayed when the finished operation amount (loaded soil amount) reaches the target operation amount (target soil amount). The automatic operation end screen includes an end notification section F12A1, an end selection section F12A2, and a cancellation selection section F12A3. The end notification section F12A1 is a section for notifying the operator of the end of automatic operation. The end notification section F12A1 notifies that a task that is automatically performed based on instruction data ends. The end selection section F12A2 is a section that is selected to end a task that is automatically performed based on instruction data. The cancellation selection section F12A3 is a section that is selected not to end a task that is automatically performed based on instruction data. For example, when the cancellation selection section F12A3 is selected, the before automatic operation start screen (see FIG. 9A) may be displayed again, or automatic operation may start again after the operation count and the target operation amount are changed, for example.

When an automatically-performed task ends, a result of the task (result display section) may be displayed. The result of the task may include, for example, at least an amount of finished operation target, an operation count, and an operation time.

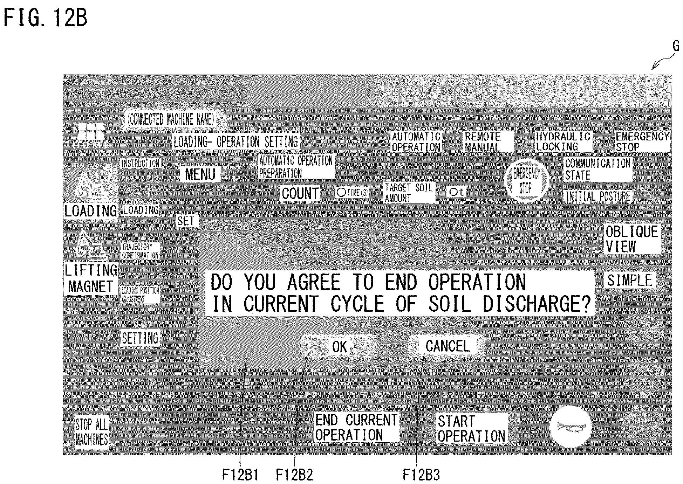

FIG. 12B shows a suspension screen. The suspension screen is a screen that is displayed when automatic operation is suspended. The suspension of automatic operation indicates that automatic operation is suspended in a state in which the finished operation amount (loaded soil amount) has not reached a target operation amount (target soil amount). The suspension screen is, for example, displayed when the suspension selection section F10A8 (see FIG. 10A), F11A8 (see FIG. 11) is selected. The suspension screen includes a suspension notification section F12B1, an end selection section F12B2, and a cancellation selection section F12B3. The suspension notification section F12B1 is a section by which suspension of automatic operation is notified. The suspension notification section F12B1 notifies that the task is finished in the current cycle. The end selection section F12B2 is a section (OK button) which is selected when the automatic operation is suspended. The cancellation selection section F12B3 is a section (cancellation button) which is selected when the automatic operation is not suspended (i.e., the automatic operation is continued).

When the automatic operation is suspended, the working machine 10 continues the automatic operation until the machine takes the initial posture, and stops when the machine takes the initial posture. This initial posture is, for example, an initial posture at the start of the automatic operation. This initial posture is, for example, the posture at the start of the initial work phase P (e.g., the catching phase P1 (see FIG. 8)) when plural work phases P (see FIG. 8) are set. The following will describe a specific example of suspension of automatic operation. For example, assume that the suspension selection section F11A8 (see FIG. 11) is selected during the release phase P3 (see FIG. 8). In this case, the working machine 10 completes the release phase P3, completes the return turning phase P4 (see FIG. 8), and stops when the machine takes the initial posture. After the suspension selection section F11A8 (see FIG. 11) is selected, a notification (during suspension display section) indicating that suspension is being performed may be displayed until the working machine 10 takes the initial posture.

### (Emergency Stop)

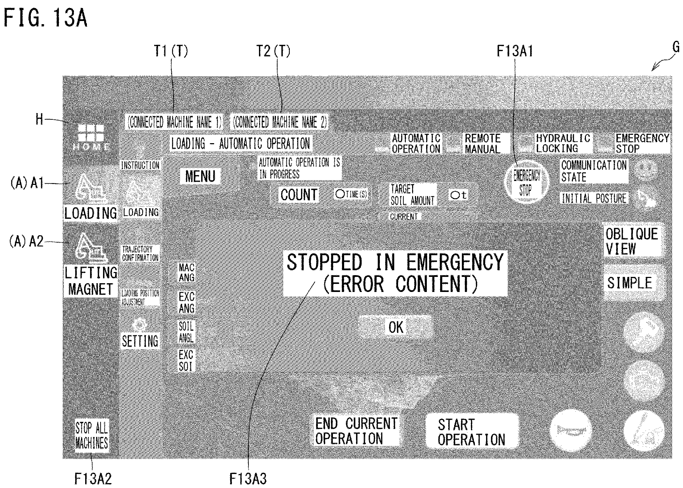

FIG. 13A shows an emergency stop screen. The emergency stop screen is a screen that is displayed when the working machine 10 stops in emergency.

A condition (emergency stop condition) of emergency stop of the working machine 10 may include selection of an emergency stop selection section F13A1. The emergency stop condition may include selection of an all machine stop selection section F13A2. The emergency stop condition may be another condition and may include a condition set in the controller of the working machine 10 or the automatic operation information processing device 20.

The emergency stop selection section F13A1 is a section (e.g., an emergency stop button) which is selected when the working machine 10 whose information is displayed in the main display area M (i.e., the working machine 10 corresponding to the selected machine selection section T) is stopped in emergency. The emergency stop selection section F13A1 may be displayed in automatic operation, and not displayed when the automatic operation is not performed.

The all machine stop selection section F13A2 is a section (e.g., an all machine emergency stop button) which is selected when all working machines 10 (having already been) connected to the information terminal 23 are stopped in emergency.

When the all machine stop selection section F13A2 is provided, the following effect can be achieved. For example, there is a case where, in order to stop a working machine 10 from the information terminal 23, the operator selects a machine selection section T corresponding to the working machine 10 to be stopped, and then selects the emergency stop selection section F13A1. In this case, if the working machine 10 that the operator wishes to stop is different from the working machine 10 selected by the machine selection section T, the operator needs to select the machine selection section T corresponding to the working machine 10 to be stopped (switch the screen) and then select the emergency stop selection section F13A1. It is therefore necessary to select the machine selection section T, and this operation takes time. Furthermore, when plural working machines 10 are connected to the information terminal 23, the operator is required to perform plural steps in order to stop all connected working machines 10. Specifically, the operator needs to repeatedly switch the machine selection section T and select the emergency stop selection section F13A1. For example, when all connected working machines 10 need to be stopped in emergency due to, for example, occurrence of a disaster, it is not desirable to take time for operations for the emergency stop. The all machine stop selection section F13A2 is provided for this reason. The operator is allowed to stop all connected working machines 10 in emergency by selecting (e.g., pressing) the all machine stop selection section F13A2 (all machine stop function). The operator is therefore able to stop all connected working machines 10 without selecting the machine selection section T (i.e., without switching the screen).

This all machine stop selection section F13A2 is preferably displayed at all time when at least one working machine 10 is connected to the information terminal 23. To be more specific, even if the content (state) of the display image G variously changes (varies), the all machine stop selection section F13A2 is preferably displayed in the display image G at all time when a working machine 10 is connected to the information terminal 23. Specifically, for example, the all machine stop selection section F13A2 is preferably displayed in a state in which a working machine 10 is selected in the machine selection section T and information regarding the selected working machine 10 is displayed in the display image G. Furthermore, the all machine stop selection section F3B4 is preferably displayed even in a screen in which a working machine 10 is connected to the information terminal 23 but the working machine 10 is not selected in the machine selection section T as described in a home screen shown in FIG. 3B, for example. When no working machine 10 is connected to the information terminal 23, the all machine stop selection section F13A2 shown in FIG. 13A may not be displayed (see FIG. 14A).

This all machine stop selection section F13A2 is preferably displayed always at a specific position (always at the same position) in the display image G when at least one working machine 10 is connected to the information terminal 23. This specific position is a position of a part of the display image G, and is the position of a specific portion of the display image G. For example, the all machine stop selection section F13A2 is displayed at, for example, a part where image display does not change even if the state of the display image G changes. Specifically, for example, the all machine stop selection section F13A2 is displayed in a part that does not change in accordance with the selection state of the machine selection section T. In the example shown in FIG. 13A, the all machine stop selection section F13A2 is displayed below the home selection section H, below the task selection section A, and in a lower left part of the display image G. For example, the all machine stop selection section F13A2 may be displayed in an upper part of the display image G, or may be displayed in an area above the machine selection section T (i.e., in a header at an upper part of the screen) (not illustrated).

This all machine stop selection section F13A2 is selectable (operable) at all time when at least one working machine 10 is connected to the information terminal 23. This all machine stop selection section F13A2 is in a state in which all working machines 10 connected to the information terminal 23 can be stopped in emergency at all time when at least one working machine 10 is connected to the information terminal 23.

This all machine stop selection section F13A2 is preferably arranged so that all connected working machines 10 are stopped in emergency only by one operation (one action) made to the all machine stop selection section F13A2. In this case, the operator is allowed to stop the connected working machines 10 in emergency, by performing a simple operation. The all machine stop selection section F13A2 may be arranged so that all connected working machines 10 are stopped in emergency by performing plural operations. For example, when a confirmation operation (e.g., pressing an OK button) is performed after the all machine stop selection section F13A2 is selected, a connected working machine 10 may be stopped in emergency.

When this all machine stop selection section F13A2 is selected, the information terminal 23 sends an emergency stop signal simultaneously to all connected working machines 10.

When a working machine 10 (one or plural working machines 10) is stopped in emergency, the machine selection section T is displayed as follows, for example. The machine selection section T corresponding to the working machine 10 stopped in emergency indicates the occurrence of emergency stop (emergency stop display). This emergency stop display is displayed to be distinguishable (for the operator) from the image display of the machine selection section T when the working machine 10 is not stopped in emergency. Specifically, for example, the color of the machine selection section T is green when the working machine 10 is not stopped in emergency, and red when the working machine 10 is stopped in emergency. When there are plural working machines 10 connected to the information terminal 23 and all of these machines are stopped in emergency, all machine selection sections T (e.g., a first machine selection section T1 and a second machine selection section T2) are in emergency stop display. As described above, a non-selected machine selection section T is displayed in a state indicating non-selection (e.g., flicking), whereas a selected machine selection section T is displayed in a state indicating selection (e.g., non-flicking).

The emergency stop screen includes an emergency stop notification section F13A3. The emergency stop notification section F13A3 is a section by which emergency stop of a working machine 10 is notified. The emergency stop notification section F13A3 may notify a reason (error content) of emergency stop of a working machine 10.

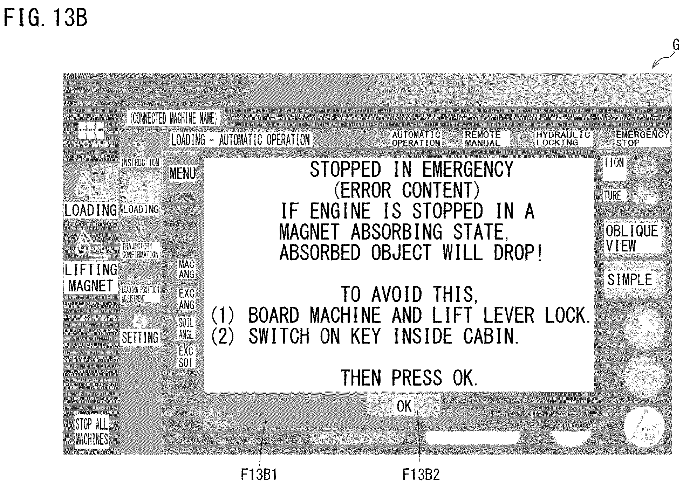

When the emergency stop selection section F13A1 or the all machine stop selection section F13A2 is selected (hereinafter, this case may be referred to as "when emergency stop is selected"), the working machine 10 stops in emergency in the following manner, for example. For example, when emergency stop is selected, the working machine 10 may immediately shift to an emergency stop state. In this case, the working machine 10 becomes stationary in the middle of a currently-performed task. Alternatively, for example, when emergency stop is selected, the working machine 10 may shift to the emergency stop state and become stationary when a currently-performed task (e.g., a currently-performed work phase P (see FIG. 8) or one cycle of automatic operation) is finished. Furthermore, for example, when emergency stop is selected while the working machine 10 is in a state of holding an operation target, the working machine 10 may shift to the emergency stop state and become stationary after the operation target is automatically released. In this case, the working machine 10 preferably releases the operation target at a position where the operation target can be stably provided. When emergency stop is selected while the working machine 10 holds an operation target, a notification (see FIG. 13B) corresponding to each of below-described types of tasks may be made.

After the working machine 10 is stopped in emergency, recovery is performed in the following manner, for example. The recovery may indicate cancellation of the emergency stop state. Specifically, for example, the recovery may indicate cancellation of the emergency stop state by switching off the engine of the working machine 10 and disconnecting the information terminal 23 from the working machine 10. The recovery may indicate cancellation of the emergency stop state and restart of automatic operation. For example, the operator selects a machine selection section T corresponding to a working machine 10 to be recovered, and performs an operation (recovery operation) of recovering the selected working machine 10. When plural (e.g., all) working machines 10 are stopped in emergency, the operator performs the recovery operation for each machine. The information terminal 23 may be arranged to allow plural working machines 10 to be recovered simultaneously.

FIG. 13B shows an emergency stop screen corresponding to a work content. This screen includes an emergency stop notification section F13B1 and a selection section F13B2.

In this regard, when the working machine 10 is stopped in emergency, the state of the working machine 10 may be changed by, for example, turning off the engine or canceling the automatic operation mode and setting a manually-operable operation mode. However, depending on the work content, the arrangement of the working machine 10, the type of the leading-end attachment 15c, etc., a problem may occur due to a change of the state of the working machine 10. Therefore, a notification enabling avoidance of a problem is preferably made. The following will describe a specific example of such a notification. The emergency stop notification section F13B1 is displayed when a working machine 10 performing a lifting magnet task is stopped in emergency. The emergency stop notification section F13B1 notifies the content of the problem. To be more specific, the emergency stop notification section F13B1 notifies that, if the engine is stopped while a magnet adsorbs an operation target (metal), the operation target may drop off from the magnet. Furthermore, the emergency stop notification section F13B1 notifies a way of avoiding the problem. In this example, the emergency stop notification section F13B1 notifies a way of avoiding the operation target from dropping off from the magnet. Specifically, the emergency stop notification section F13B1 notifies that the operator boards the working machine 10 and lifts the lever lock (to be in the locked state) to cause the working machine 10 not to be operable. The emergency stop notification section F13B1 notifies that the operator switches on the key in the driver's cabin 13a and maintains the state in which the engine is turned on (driving). The emergency stop notification section F13B1 notifies that the selection section F13B2 (OK button) is pressed in a state in which the lever lock is lifted and the key is switched on. When the selection section F13B2 is selected, a notification (not illustrated) that the automatic operation mode is to be canceled is displayed, and the automatic operation mode is canceled. Thereafter, for example, the lever lock is released, and the operator operates the working machine 10 to unload the operation target. The example above explains the case where the working machine 10 performing the lifting magnet task is stopped in emergency. In addition to this, when the working machine 10 performing another type of task is stopped in emergency, a notification corresponding to that type of task may be displayed.

### (Setting)

FIG. 14A shows a connection setting screen. The connection setting screen is a screen that is displayed when setting for connecting the information terminal 23 with the working machine 10 is performed. The connection setting screen is displayed when, for example, a setting section B5 is selected. The connection setting screen includes a setting item selection section F14A1, a connection setting selection section F14A2, a new connection selection section F14A3, a registered machine selection section F14A4, and a parameter setting selection section F14A5.

The setting item selection section F14A1 is a section that is displayed to allow one of setting items to be selectable. The connection setting selection section F14A2 is part of the setting item selection section F14A1. The connection setting selection section F14A2 is a section that is selected when setting regarding the connection between the information terminal 23 and the working machine 10 is performed. The new connection selection section F14A3 is a section that is selected when a new working machine 10 is connected to the information terminal 23. When a new working machine 10 is connected, for example, information (e.g., an IP address and a registered machine name) for specifying the working machine 10 to be connected is set. The registered machine name is, for example the name of a working machine 10 displayed in the machine selection section T (see FIG. 14B), the registered machine selection section F14A4, etc.

FIG. 14B shows a new connection task selection screen. The new connection task selection screen includes task selection sections F14BA1 and F14BA2. The task selection sections F14BA1 and F14BA2 are sections for selecting, when a new working machine information terminal is connected to the information terminal 23, with which type of task the working machine 10 to be connected is associated. It is noted that this new connection task selection screen is a task selection screen (application selection screen) associated with the newly-connected working machine 10, and is not a home screen (see FIG. 3A and FIG. 3B). In this screen, the machine quantity display section F3B3 (see FIG. 3B) is not displayed.

The registered machine selection section F14A4 shown in FIG. 14A is a section which displays information of a working machine 10 (registered machine) which was connected to the automatic operation information processing device 20 (e.g., the information terminal 23) in the past. For example, the registered machine selection section F14A4 displays the registered machine name of the registered machine. When a registered machine is selected by the registered machine selection section F14A4, information regarding the registered machine may be notified. The information to be notified may include a registered machine name, information of connection between a registered machine and the automatic operation information processing device 20 (e.g., the date and time of previous connection), and information regarding a task performed at the previous connection (e.g., previous operation time) .

The status of display of the registered machine displayed in the registered machine selection section F14A4 may change depending on whether the machine corresponds to the task selected in the task selection section A. For example, if the loading task selection section A1 is selected in the task selection section A, the registered machine selection section F14A4 may display the registered machine to allow the operator to distinguish whether the machine corresponds to the loading task. To be more specific, for example, the registered machine selection section F14A4 may cause a registered machine corresponding to the type of the task selected in the task selection section A to be active (selectable) and may cause a registered machine not corresponding to the type of the task selected in the task selection section A to be inactive (not selectable). The registered machine selection section F14A4 may cause a registered machine not corresponding to the type of the task selected in the task selection section A to be non-displayed.

The parameter setting selection section F14A5 is a section that is selected when a parameter is set (not illustrated). The parameter to be set may be a parameter regarding the working machine 10, or a parameter regarding automatic operation.

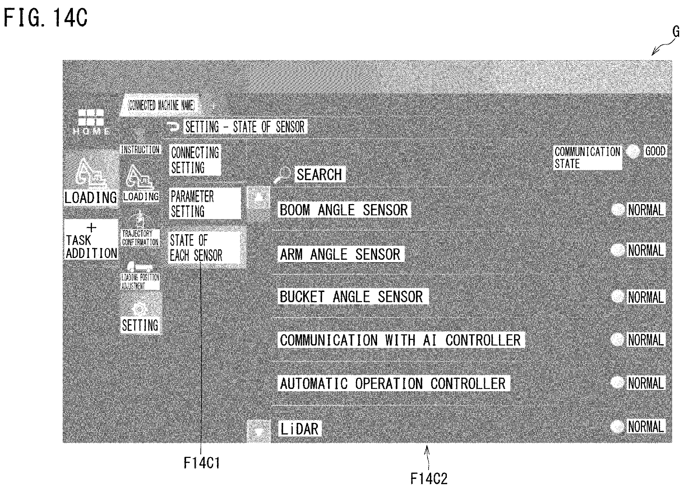

FIG. 14C shows a sensor state display screen. The sensor state display screen is a screen displaying the state of a sensor. The sensor state display screen includes a sensor state selection section F14C1 and a sensor state display section F14C2. The sensor state selection section F14C1 is a section that is selected to display a sensor state display screen (sensor state display section F14C2). The sensor state display section F14C2 displays the state of a sensor provided at the working machine 10 or outside the working machine 10, in the same manner as the sensor state display section F10C1 (see FIG. 10).

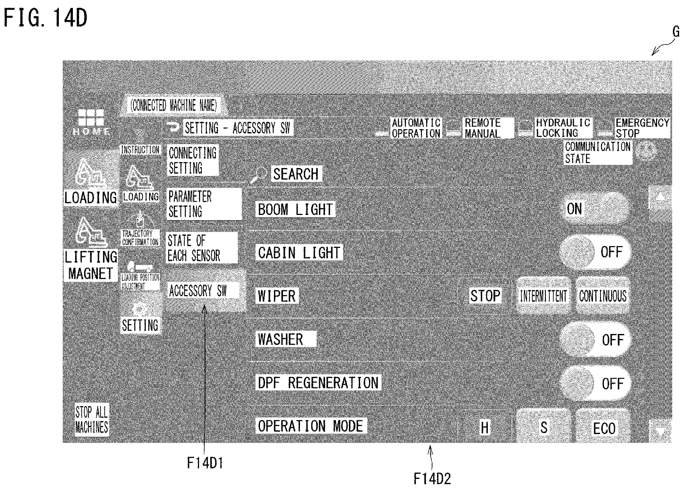

FIG. 14D shows an accessory operation screen. The accessory operation screen is a screen which displays the state of each device (accessory) of the working machine 10 in a manner in which each accessory is (remotely) operable. The accessory operation screen includes an accessory operation selection section F14D1 and an accessory state display setting section F14D2. The accessory operation selection section F14D1 is a section by which an accessory operation screen (accessory state display setting section F14D2) is displayed. The accessory state display setting section F14D2 is a section (accessory state display section) that displays the state of an accessory. The accessory state display setting section F14D2 is a section (accessory state setting section) that displays the state of an accessory to be settable (changeable). In the accessory state display setting section F14D2, for example, the state of a displayable and settable accessory (displayable settable accessory state) may encompass switching on and off of a light (boom light, cabin light, etc.). The displayable settable accessory state may encompass the activation and deactivation of a wiper, operation intervals (intermittent or continuous) of the wiper, switching on and off of a washer (device for cleaning a window of the driver's cabin 13a), and switching on and off of DPF (Diesel Particulate Filter) regeneration. The displayable settable accessory state may include operation modes (high speed, low speed, and fuel-saving (ECO)) of the working machine 10.

### (Specific Example of Operation)

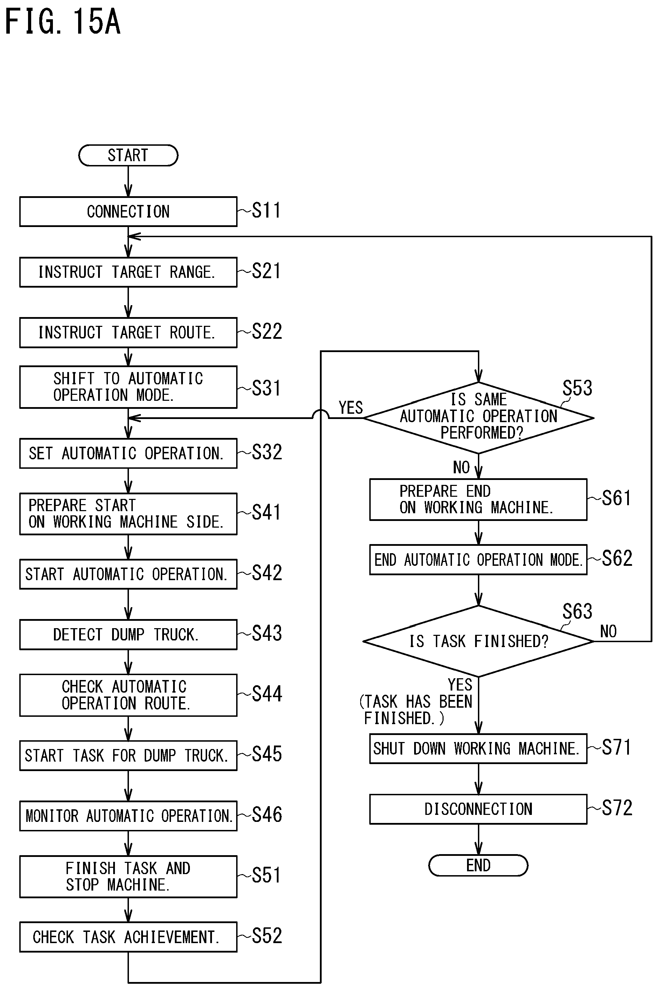

With reference to a flowchart shown in FIG. 15A, the following will explain further specific examples of the operation of the automatic operation information processing device 20 shown in FIG. 1 (mainly the operation of the control unit 23c), the automatic operation information processing method, and the automatic operation information processing program. Hereinafter, unless otherwise specified, the explanation will be given along the order of steps of the operation (task, process) of the automatic operation information processing device 20. The order of steps of the operation can be variously changeable. In the description below, the steps S11 to S72 shown in FIG. 15A will be explained with reference to FIG. 15A.

In the step S11, an information terminal 23 shown in FIG. 1 is connected to a working machine 10.

In the step S21, a target range TA (see FIG. 10D) is instructed (i.e., area teaching is performed) (see FIG. 6).

In the step S22, a target route PA (see FIG. 10D) is instructed (i.e., route teaching is performed) (see FIG. 4C) .

In the step S31, the operating mode of the working machine 10 is changed (shifts) to an automatic operation mode. For example, when the above-described automatic operation mode start condition is satisfied (see FIG. 7A and FIG. 7B), the operating mode of the working machine 10 shifts to the automatic operation mode (see FIG. 7C).

In the step S32, setting of automatic operation (automatic operation setting) is performed. To be more specific, as shown in FIG. 8, initial setting regarding the automatic operation is performed. Furthermore, as shown in FIG. 9A, FIG. 9B, FIG. 9C, and FIG. 9D, the operation speed of the automatic operation, etc. is set.

In the step S41, the start of the automatic operation of the working machine 10 is prepared. For example, the posture of the working machine 10 is changed to a posture with which the automatic operation can start.

In the step S42, the working machine 10 starts the automatic operation (see FIGs. 10A, 10B, 10C, 10D, and 11).

In the steps S43, S44, and S45, the following operations are performed. When a transportation vehicle is detected in a transportation vehicle (dump truck) detection area (step S43), a target route PA (see FIG. 10D) provided for performing a task (e.g., soil discharge) for the transportation vehicle is displayed in the display unit 23o (step S44). When the operator selects an option to cause the working machine 10 to perform a task along this target route PA, the working machine 10 starts the task for the transportation vehicle (step S45).

In the step S46, the control unit 23c (see FIG. 1) monitors the automatic operation of the working machine 10. For example, the control unit 23c monitors the state of the automatically-performed task (progress, whether the task is normally done or not, etc.), as shown in FIG. 10A and FIG. 11. Furthermore, the control unit 23c monitors, for example, whether to suspend the automatic operation (whether the suspension selection section F10A8 shown in FIG. 10A is selected) and whether to stop the automatic operation in emergency (whether the emergency stop selection section F13A1 shown in FIG. 13 is selected).

In the step S51, the task automatically performed by the working machine 10 is finished and the automatic operation of the working machine 10 is stopped. When the automatic operation is normally finished, an automatic operation end screen shown in FIG. 12A is displayed in the display unit 23o. When the automatic operation is suspended, a suspension screen shown in FIG. 12B is displayed in the display unit 23o.

In the step S52, achievement by the automatically-performed task is displayed in the display unit 23o. For example, an operation amount after the finish of the task is displayed in the current operation amount display section F10A3b shown in FIG. 10A and the current operation amount display section F11A3 shown in FIG. 11.

In the step S53, the control unit 23c (see FIG. 1) determines whether to perform an automatic operation that is identical with (or substantially identical with) a completed automatic operation. For example, the control unit 23c may perform this determination based on an input (selection) by the operator. Furthermore, for example, the control unit 23c may automatically perform the determination based on the state (e.g., an operation amount, the number of times, and time) of the task. When the automatic operation identical with (or substantially identical with) the completed automatic operation is performed (i.e., YES in the step S53), the control unit 23c returns the flow to the step S32. When the automatic operation identical with (or substantially identical with) the completed automatic operation is not performed (i.e., NO in the step S53), the control unit 23c returns the flow to the step S61.

In the step S61, preparation for ending the automatic operation mode in the working machine 10 (machine-side end preparation) is performed. For example, the control unit 23c changes the posture of the working machine 10 to the initial posture.

In the step S62, the control unit 23c ends the automatic operation mode of the working machine 10.

In the step S63, the control unit 23c determines whether to finish the task performed by the working machine 10. For example, the control unit 23c determines whether to finish the task automatically performed by the working machine 10 by using the information terminal 23 (e.g., whether to finish the task of the day). When finishing the task performed by the working machine 10 (YES in the step S63), the control unit 23c causes the flow to proceed to the step S71. When not finishing the task performed by the working machine 10 (NO in the step S63), the control unit 23c causes the flow to go back to the step S21.

In the step S71, the working machine 10 is shut down. Specifically, the engine of the working machine 10 is turned off and the power source is turned off. For example, the information terminal 23 may send a command to shut down the working machine 10 to the working machine 10. Alternatively, the working machine 10 may be shut down manually by the operator.

In the step S72, the information terminal 23 and the working machine 10 are disconnected.

### (Process of All Machine Emergency Stop)

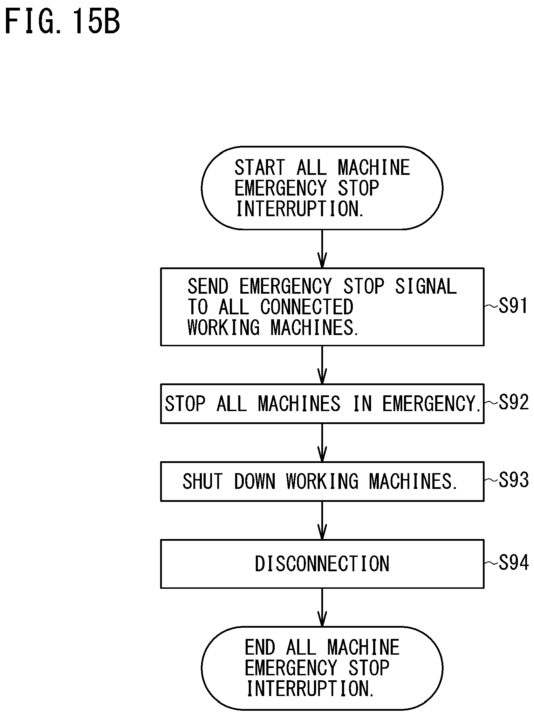

With reference to a flowchart shown in FIG. 15B, the following will describe a specific example of a process performed by the automatic operation information processing device 20 (mainly the control unit 23c) shown in FIG. 1, when the all machine stop selection section F13A2 shown in FIG. 13A is selected. Hereinafter, unless otherwise specified, the explanation will be given along the order of steps of the operation (task, process). The order of steps of the operation can be variously changeable.

When the all machine stop selection section F13A2 shown in FIG. 13A is selected, a process of all machine emergency stop shown in FIG. 15B is performed (in an interrupting manner) no matter which step shown in FIG. 15A is being performed. It is noted that the step S91 to the step S94 shown in FIG. 15B will be explained with reference to FIG. 15B.

In the step S91, the information terminal 23 shown in FIG. 1 sends an emergency stop signal to all working machines 10 connected to (having already been connected to) the information terminal 23.

In the step S92, all working machines 10 having already been connected to the information terminal 23 are stopped in emergency.

In the step S93, all working machines 10 having already been connected to the information terminal 23 are shut down. (This shut down is identical with the step S71 shown in FIG. 15A. )

In the step S94, the connection between the information terminal 23 and all working machines 10 having already been connected to the information terminal 23 is cut off.

It is noted that each operation (e.g., display, selection, and setting) of the automatic operation information processing device 20 may be regarded as each step in the method and the program. Specifically, for example, selection may be regarded as a selection step. To be further specific, for example, selection of a working machine 10 in the machine selection section T (see FIG. 2) may be regarded as a working machine selection step.

### (Effect of First Aspect of Invention)

Effects of the automatic operation information processing device 20 shown in FIG. 1 are as follows.

[Feature 1] The automatic operation information processing device 20 is connected to the working machine 10 capable of performing automatic operation, in a communicable manner. The automatic operation information processing device 20 includes a display unit 23o and an input unit 23i. The display unit 23o is configured to display a display image G including information related to automatic operation. The input unit 23i receives information related to automatic operation in response to an operation by the operator.

With the above-described [Feature 1], the operator can easily check and input information regarding the automatic operation of the working machine 10 by using the automatic operation information processing device 20.

### (Effect of Second Aspect of Invention)

[Feature 2] As shown in FIG. 2, the display image G has the task selection section A. The task selection section A is displayed for each type of task that is automatically performed by the working machine 10 (see FIG. 1; hereinafter, the same is applicable in regard to the working machine 10). The task selection section A displays the types of tasks to be selectable through the input unit 23i (see FIG. 1).

With the above [Feature 2], the operator can easily select the type of the task performed by the working machine 10.

### (Effect of Third Aspect of Invention)

[Feature 3] The image of the task selection section A changes depending on the number of connected working machines 10 of each type of task.

With the above [Feature 3], the operator can easily grasp the number of connected working machines 10 for each type of task.

### (Effect of Fourth Aspect of Invention)

[Feature 4] The display image G includes the function selection section B. The function selection section B is displayed for each function corresponding to the type of task selected by the task selection section A. The function selection section B displays functions to be selectable through the input unit 23i (see FIG. 1).

With the above [Feature 4], the operator can easily select a function corresponding to the type of the task selected by the task selection section A.

### (Effect of Fifth Aspect of Invention)

[Feature 5] The display image G includes the machine selection section T and the main display area M. The machine selection section T is displayed for each working machine 10 so that each working machine 10 is selectable by the input unit 23i (see FIG. 1). The main display area M displays information regarding the working machine 10 selected by the machine selection section T. The main display area M is an area different from the machine selection section T in the display area of the display unit 23o (see FIG. 1).

With the above-described [Feature 5], the operator can easily select the working machine 10 whose information is displayed in the main display area M.

### (Effect of Sixth Aspect of Invention)

[Feature 6] The image of the machine selection section T changes depending on the state of the working machine 10.

With the above-described [Feature 6], the operator can easily grasp the state of the working machine 10 by checking the machine selection section T.

### (Effect of Seventh Aspect of Invention)

[Feature 7] The image of the machine selection section T changes depending on at least whether the current state is a state in which automatic operation is in progress, a state in which the automatic operation has been properly finished, or a state in which the working machine 10 is stopped in emergency.

With the above-described [Feature 7], by checking the machine selection section T, the operator is able to easily grasp at least a state in which automatic operation is in progress, a state in which the automatic operation has been properly finished, or a state in which the working machine 10 is stopped in emergency.

### (Effect of Eighth Aspect of Invention)

[Feature 8] The image of the machine selection section T changes between a case where a machine selection section T corresponding to a working machine 10 whose state has changed is selected and a case where the machine selection section T is not selected after the state of the working machine 10 is changed.

With the above-described [Feature 8], the operator can easily grasp whether the machine selection section T corresponding to the working machine 10 whose state has changed is selected, by checking the machine selection section T. As a result, the operator can easily grasp whether the information of the working machine 10 whose state has changed has been confirmed in the main display area M.

### (Effect of Ninth Aspect of Invention)

The automatic operation is performed based on instruction data that is set by an operation of the working machine 10 by the operator.

[Feature 9] As shown in FIG. 8, the display image G has the operation speed setting section SS. The operation speed setting section SS is displayed to allow one of plural stages of operation speeds including the operation speed of the working machine 10 in the instruction data to be selectable by the input unit 23i (see FIG. 1) as the operation speed in the automatic operation.

With the above-described [Feature 9], the operator can easily set the operation speed of the working machine 10 in the automatic operation.

### [Effect of Tenth Aspect of Invention]

[Feature 10] The fastest operation speed among plural stages of operation speeds (in [Feature 9] above) is the operation speed of the working machine 10 in the instruction data.

In the above-described [Feature 10], the operation speed of the working machine 10 in the automatic operation is equal to or lower than the operation speed in the instruction data. It is therefore possible to suppress the working machine 10 from being automatically operated at a high operation speed that is not intended by the operator.

### [Effect of Eleventh Aspect of Invention]

[Feature 11] One cycle of automatic operation includes plural work phases P. The operation speed setting section SS is displayed so that the operation speed in the automatic operation can be set for each work phase P.

With the above-described [Feature 11], the operator can easily set the operation speed of the working machine 10 in the automatic operation for each work phase P.

### [Effect of Twelfth Aspect of Invention]

[Feature 12] The display image G is switched between the first speed display state SP1 and the second speed display state SP2 (see FIG. 9A). The first speed display state SP1 is a state in which all stages of the operation speeds in each of the work phases P are displayed. As shown in FIG. 9A, the second speed display state SP2 is a state in which an operation speed of only a stage set by the operation speed setting section SS in at least one of the work phases P is displayed.

According to the above-described [Feature 12], image display in the second speed display state SP2 shown in FIG. 9A is simpler than image display in the first speed display state SP1 shown in FIG. 8. The operator is therefore able to easy grasp the operation speed set by the operation speed setting section SS shown in FIG. 8.

### [Effect of Thirteenth Aspect of Invention]

[Feature 13] As shown in FIG. 10D, one cycle of automatic operation includes plural work phases P. The display image G includes the work phase display section PD that displays information indicating in which work phase P the task performed by the working machine 10 is.

With the above-described [Feature 13], the operator can easily grasp in which work phase P the task performed by the working machine 10 is.

### [Effect of Fourteenth Aspect of Invention]

[Feature 14] As shown in FIG. 13A, the display image G includes the all machine stop selection section F13A2 by which all connected working machines 10 (having already been connected to the automatic operation information processing device 20) are stopped in emergency.

With the above-described [Feature 14], the operator is allowed to stop all of the working machines 10 connected to the automatic operation information processing device 20 in emergency, by performing a simple operation.

### [Effect of Fifteenth Aspect of Invention]

[Feature 15] The all machine stop selection section F13A2 stops all connected working machines 10 (having already been connected to the automatic operation information processing device 20) in emergency, through only a single operation.

With the above-described [Feature 15], the operator is allowed to stop all of the working machines 10 connected to the automatic operation information processing device 20 in emergency, by performing a simpler operation.

### [Effect of Sixteenth Aspect of Invention]

[Feature 16] The all machine stop selection section F13A2 is always displayed at a specific position that is a part of the display image G when a working machine 10 is connected (i.e., when a working machine 10 is connected to the automatic operation information processing device 20).

With the above-described [Feature 16], the operator can easily grasp in which position of the display image G the all machine stop selection section F13A2 is located. On this account, the operator is allowed to easily stop all of the working machines 10 connected to the automatic operation information processing device 20 in emergency.

### (Effect of Seventeenth Aspect of Invention)

[Feature 17] As shown in FIG. 2, the display image G includes the machine state display section F2A3 that displays the state of the working machine 10. The image of the machine state display section F2A3 is synchronized with the image display of the state display device 13b (see FIG. 1). The state display device 13b is mounted on the actual working machine 10 and is used to display the state of the working machine 10.

With the above [Feature 17], the operator can grasp the state of the actual working machine 10 by looking at the machine state display section F2A3 displayed in the display image G, without looking at the state display device 13b of the actual working machine 10.

### (Effect of Eighteenth Aspect of Invention)

[Feature 18] The display image G is switchable between the detail screen (first screen) (see FIG. 10A) and the during automatic operation simple screen (second screen) (see FIG. 11). As shown in FIG. 11, the information regarding automatic operation displayed in the during automatic operation simple screen includes only part of information regarding automatic operation displayed in the detail screen (see FIG. 10A).

According to [Feature 18] above, when the operator views the during automatic operation simple screen, the operator can easily obtain information regarding automatic operation (e.g., with a short viewing time) as compared to a case where the operator views the detail screen (see FIG. 10A).

### [Effect of Nineteenth Aspect of Invention]

[Feature 19] The during automatic operation simple screen includes the state display section F11A1 that displays a state regarding automatic operation. The states displayed by the state display section F11A1 include a state in which the working machine 10 is automatically performing a task, a state in which the working machine 10 is on standby, and a state in which the working machine 10 is stopped in emergency.

With the above-described [Feature 19], the operator can easily grasp the state of the working machine 10 (e.g., with a short viewing time).

### (Effect of Twentieth Aspect of Invention)

[Feature 20] The automatic operation information processing method includes a connection step, a display step, and an input step. In the connection step, connection to a working machine 10 capable of performing automatic operation is made in a communicable manner. In the display step, the display image G including information regarding automatic operation is displayed in the display unit 23o. In the input step, information regarding automatic operation, which is input by the operator through the input unit 23i shown in FIG. 1, is obtained.

With the above-described [Feature 20], the operator can easily check and input information regarding the automatic operation of the working machine 10.

### (Effect of Twenty-First Aspect of Invention)

[Feature 21] The automatic operation information processing program causes a computer (control unit 23c) to execute the connection step, the display step, and the input step. In the connection step, connection to a working machine 10 capable of performing automatic operation is made in a communicable manner. In the display step, the display image G including information regarding automatic operation is displayed in the display unit 23o. In the input step, information regarding automatic operation, which is input by the operator through the input unit 23i, is obtained.

With the above-described [Feature 21], the operator can easily check and input information regarding the automatic operation of the working machine 10.

### (Modifications)

The embodiment described above may be variously modified. For example, the number of components (e.g., sections of the display image G) in the embodiment above (including the modifications) may he changed, and one or some of the components may not be provided. For example, the modifications of the embodiment above may be variously combined. For example, the disposition of the components may be changed. For example, the inclusion relationship of the components may be changed. For example, a component that is described as a component inferior to another component may not be included in the another component, and may be included in a different component. For example, those described as different members or different parts may be a single member or part. For example, those described as a single member or part may be provided in a divided manner as plural members or parts. For example, the order of transition of the display image G may be changed. For example, components described as those of different screens may be displayed in the same screen. For example, each component may have only some of the characteristics (operating function, arrangement, shape, action, etc.).

### [Reference Signs List]

10 working machine
13b state display device
20 automatic operation information processing device
23c control unit
23i input unit
23o display unit
A task selection section
B function selection section
F2A3 machine state display section
F3B4, F13A2 all machine stop selection section
F11A1 state display section
G display image
M main display area
P work phase
PD work phase display section
SS operation speed setting section
SP1 first speed display state
SP2 second speed display state
T machine selection section

## Claims

1. An automatic operation information processing device connected to an automatically-operable working machine in a communicable manner, comprising:
a display unit which is configured to display a display image including information related to automatic operation; and
an input unit which is configured to receive information related to the automatic operation in response to an operation by an operator.

2. The automatic operation information processing device according to claim 1, wherein,
the display image includes
a task selection section which is displayed for each of types of tasks automatically performed by the working machine and which displays the types of the tasks in a manner selectable by the input unit.

3. The automatic operation information processing device according to claim 2, wherein,
image display in the task selection section changes for each of the types of the tasks, in accordance with the number of connected working machines corresponding to each of the types of the tasks.

4. The automatic operation information processing device according to claim 2 or 3, wherein,
the display image includes
a function selection section which is displayed for each of functions corresponding to the type of the task selected in the task selection section and which displays the functions in a manner selectable by the input unit.

5. The automatic operation information processing device according to any one of claims 1 to 4, wherein,
the display image includes:
a machine selection section which is displayed for each working machine so that each working machine is selectable by the input unit; and
a main display area which displays information regarding the working machine selected by the machine selection section and is an area different from the machine selection section among display areas on the display unit.

6. The automatic operation information processing device according to claim 5, wherein,
an image of the machine selection section changes depending on a state of the working machine.

7. The automatic operation information processing device according to claim 6, wherein,
the image of the machine selection section changes depending on at least one of a state in which the automatic operation is in progress, a state in which the automatic operation has been properly finished, or a state in which the working machine is stopped in emergency.

8. The automatic operation information processing device according to claim 6 or 7, wherein,
the image of the machine selection section changes between a case where the machine selection section corresponding to a working machine whose state has changed is selected and a case where the machine selection section whose state has changed is not selected, after the state of the working machine is changed.

9. The automatic operation information processing device according to any one of claims 1 to 8, wherein,
the automatic operation is performed based on instruction data that is set by an operation of the working machine by the operator, and
the display image includes
an operation speed setting section which is displayed to allow one of plural stages of operation speeds including an operation speed of the working machine in the instruction data to be selectable by the input unit as an operation speed in the automatic operation.

10. The automatic operation information processing device according to claim 9, wherein,
the fastest operation speed among plural stages of operation speeds is the operation speed of the working machine in the instruction data.

11. The automatic operation information processing device according to claim 9 or 10, wherein,
one cycle of the automatic operation includes plural work phases, and
the operation speed setting section is displayed so that the operation speed in the automatic operation is settable for each of the work phases.

12. The automatic operation information processing device according to claim 11, wherein,
the display image is switched between
a first speed display state in which all stages of operation speeds in each of the work phases are displayed and
a second speed display state in which an operation speed of only a stage set by the operation speed setting section in at least one of the work phases is displayed.

13. The automatic operation information processing device according to any one of claims 1 to 12, wherein,
one cycle of the automatic operation includes plural work phases, and
the display image includes a work phase display section that displays information indicating in which one of the work phases a task performed by the working machine is.

14. The automatic operation information processing device according to any one of claims 1 to 13, wherein,
the display image includes an all machine stop selection section by which all connected working machines are stopped in emergency.

15. The automatic operation information processing device according to claim 14, wherein,
the all machine stop selection section stops the all connected working machines in emergency, through only a single operation.

16. The automatic operation information processing device according to claim 14 or 15, wherein,
the all machine stop selection section is always displayed at a specific position that is a part of the display image when a working machine is connected.

17. The automatic operation information processing device according to any one of claims 1 to 16, wherein,
the display image includes a machine state display section that displays a state of the working machine, and
an image of the machine state display section is synchronized with image display of a state display device which is mounted on an actual working machine and is used to display the state of the working machine.

18. The automatic operation information processing device according to any one of claims 1 to 17, wherein,
the display image is switchable between a first screen and a second screen, and
information regarding the automatic operation displayed in the second screen includes only part of information regarding the automatic operation displayed in the first screen.

19. The automatic operation information processing device according to claim 18, wherein,
the second screen includes a state display section that displays states regarding the automatic operation, and
the states displayed by the state display section include:
a state in which the working machine is automatically performing a task;
the working machine is on standby; and
the working machine is stopped in emergency.

20. An automatic operation information processing method comprising:
a connection step of connecting to a working machine capable of performing automatic operation in a communicable manner;
a display step of displaying a display image including information related to the automatic operation on a display unit; and
an input step of obtaining information regarding the automatic operation, which is input by an operator through an input unit.

21. An automatic operation information processing program causing a computer to execute:
a connection step of connecting to a working machine capable of performing automatic operation in a communicable manner;
a display step of displaying a display image including information related to the automatic operation on a display unit; and
an input step of obtaining information regarding the automatic operation, which is input by an operator through an input unit.
